# EUROPÄISCHE PATENTSCHRIFT

(11) **EP 3 080 863 B1**
(45) Veröffentlichungstag und Bekanntmachung des Hinweises auf die Patenterteilung: **05.06.2019**
(21) Anmeldenummer: 14816174.8
(22) Anmeldetag: 10.12.2014
(51) Int. Cl.: H01M 10/6556, H01M 10/6555, H01M 10/613, H01M 10/48, H01M 10/653, H01M 10/04, H01M 2/18, H01M 2/16, H01M 2/10, H01M 10/0525, H01M 10/647, H01M 10/42

(54) **BATTERIEMODUL**
BATTERY MODULE
MODULE DE BATTERIE

(30) Priorität: 10.12.2013 DE 102013113799
(43) Veröffentlichungstag der Anmeldung: 19.10.2016
(73) Patentinhaber: Akasol GmbH, 64293 Darmstadt (DE)
(72) Erfinder: EBERLEH, Björn, 64665 Alsbach-Hähnlein (DE); RAISER, Stephen, 65203 Wiesbaden (DE); VON BORCK, Felix, 64289 Darmstadt (DE)
(74) Vertreter: Manitz Finsterwald Patent- und Rechtsanwaltspartnerschaft mbB
(86) Internationale Anmeldenummer: PCT/EP2014/077193
(87) Internationale Veröffentlichungsnummer: WO 2015/086670

(56) Entgegenhaltungen:
- EP-A1- 2 403 050
- WO-A1-2011/101391
- WO-A1-2011/101391
- WO-A1-2011/101391
- WO-A1-2013/156554
- DE-A1-102009 052 508
- DE-A1-102009 052 508
- DE-A1-102009 052 508
- DE-U1-202010 015 854
- DE-U1-202010 015 854
- JP-A- 2003 303 579
- US-A1- 2010 104 927
- US-A1- 2011 162 820
- US-A1- 2011 162 820
- US-A1- 2011 162 820
- US-A1- 2013 157 099

## Beschreibung

Die vorliegende Erfindung betrifft ein Batteriemodul bestehend aus Batteriezellen und einem Kühlmodul mit mehreren Etagen, wobei das Kühlmodul zur Aufnahme der Batteriezellen, wie z.B. Lithiumionenbatterien, ausgelegt ist, wobei das Kühlmodul aus zumindest einem ersten und einem zweiten, je mindestens einen Strömungskanal aufweisendem Seitenteil, sowie aus mehreren im Wesentlichen flächigen Elementen die sich planar zwischen den Seitenteilen erstrecken, besteht, wobei zwischen benachbarten flächigen Elementen ein innerer Raum gebildet ist und die Räume zur Aufnahme der Batteriezellen, ausgelegt sind

In der PCT-Anmeldung der Akasol GmbH mit der amtlichen Veröffentlichungsnummer WO2012/028298 wird ein Batteriemodul der eingangs genannten Art beschrieben, das zur Bildung einer Traktionsbatterie bzw. eines Traktionsbatteriemoduls für Fahrzeuge mit elektrischem Antriebsstrang verwendet wird. Durch den modularen Aufbau eines Batteriemoduls kann es auch für andere Zwecke verwendet werden, z.B. bei stationären Anwendungen oder Kleintraktionsanwendungen, wie beispielsweise in einem Rollstuhl. In dieser Schrift wird das Batteriemodul aus mehreren gleichartigen Etagenelementen aufgebaut.

Darüber hinaus ist ein weiteres Batteriemodul der eingangs genannten Art in der WO 2010/121831 beschrieben. In dieser Schrift wird das Kühlmodul aus einem einteiligen Kühlmodul mit zwei gekühlten einander gegenüberliegenden Seiten beschrieben, zwischen denen sich Kühlbleche erstrecken und dabei mehrere übereinander gestapelte Räume zur Aufnahme der Batteriezellen bilden, sodass auch hier eine Kühlmodul mit mehreren Etagen vorliegt.

Kühlmodule die mit mehreren Batteriezellen bestückt sind, bilden Batteriemodule.

Ein Batteriemodulsystem, das aus mehreren gleichartigen Batteriemodulen zusammengebaut ist, kann beispielsweise ausgelegt werden, um einen Leistungsbereich mit einem Energieinhalt zwischen 1 kWh und 400 kWh oder mehr abzudecken. Wenn beispielsweise ein Batteriemodulsystem für eine Dauerleistung von 20 kW ausgelegt ist, können dennoch zu Beschleunigungszwecken Spitzenleistungen von beispielsweise 100 kW kurzfristig von der Batterie abverlangt werden, wodurch sich ausgezeichnete Beschleunigungswerte erzielen lassen. Im Ladebetrieb kann beispielsweise mit einer Ladeleistung von 40 kW gearbeitet werden.

Die oben angegebenen Werte sind rein beispielhaft, stellen aber andererseits Werte dar, die durchaus mit kommerziell verfügbaren Lithiumionenbatterien erreicht werden können.

Der erst genannten PCT-Anmeldung mit der amtlichen Veröffentlichungsnummer WO2012/028298 liegt die Aufgabe zugrunde, ein Verfahren zur Herstellung eines modularen Kühlmoduls bzw. eine alternative Konstruktion eines modularen Kühlmoduls vorzusehen, das bzw. die ebenfalls einen ausgezeichneten Wärmeaustausch zwischen den Batteriezellen und dem Kühlmittel erlaubt. Ferner soll auch bei der Auslegung des Kühlmoduls eine extrem rationelle Herstellung gewährleistet werden, die mit wenig Materialaufwand und geringen wirtschaftlichen Kosten durchgeführt werden kann. Das Batteriemodul soll kompakt aufgebaut und thermisch optimiert ausgelegt sein, und insbesondere so ausgelegt, dass die Betriebstemperatur des Batteriemoduls bzw. des Batteriemodulsystems innerhalb enger Grenzen gehalten werden kann, um das lokale Überhitzen einzelner Zellen, erhöhte Temperaturen einer oder mehrerer Zellen oder den Betrieb bei zu niedrigen Zelltemperaturen möglichst zu vermeiden.

Um diese Aufgabe zu lösen, wird in der genannten PCT-Anmeldung ein Kühlmodul für ein aus mehreren Zellen bestehendes Batteriemodul vorgesehen, wobei das Kühlmodul die Form eines Körpers mit einem inneren Raum zur Aufnahme von Batteriezellen aufweist, wobei der Körper zwischen einem Einlassbereich und einem Auslassbereich eine oder mehrere parallel zueinander erstreckende Kühlpassagen aufweist und mindestens teilweise aus einer Länge oder aus mehreren Längen eines Hohlprofils gebildet wird. Kühlblechen werden zwischen den seitlichen Hohlprofilen des Kühlmoduls eingesetzt um Fächer zur Aufnahme der Batteriezellen zu bilden und Wärme aus den Zellen herauszuführen. Statt Kühlblechen kann auch mit Kühlflügel gearbeitet werden, die seitlich von den verwendeten Hohlprofilen in das Innere des Kühlmoduls hineinragen und ebenfalls Fächer zur Aufnahme der Batteriezellen bilden.

Die Betriebstemperatur der einzelnen Batteriezellen soll normalerweise einen Arbeitsbereich von z.B. 18°C bis 25°C nicht überschreiten, da ansonsten die Lebensdauer der einzelnen Batteriezellen eines Batteriemoduls zum Teil drastisch reduziert werden können. Dadurch, dass in vorherigen Kühlmodulen die Seitenteile des Kühlmoduls bildende Kühlbleche typischerweise mit Kühlkreisläufen versehen werden, um die Kühlung der Batteriezellen zu verwirklichen, kann es zu Problemen mit der Kühlung kommen, da die Ableitung der Wärme aus dem inneren der Zellen an das Kühlmittel nicht immer ausreichend gewährleistet werden kann. Weiterer Stand der Technik ist den folgenden Druckschriften zu entnehmen:
US 2010/104927 A1;
US 2011/0162820 A1; DE 10 2009 052508; WO 2011/101391 A1 und DE 20 2010 015854 U1. US 2011/0162820 A1 offenbart dabei einen Abstandshalter für Batteriezellen, welcher elektrisch leitend ausgebildet sein kann.

Der vorliegenden Erfindung liegt die Aufgabe zugrunde ein Batteriemodul der eingangs genannten Art zu schaffen, welches sich auf einfache Weise montieren lässt und einen Ausfall der elektrischen Versorgung vermeidet.

Diese Aufgabe wird durch ein Batteriemodul mit den Merkmalen des Anspruchs 1 gelöst.

Bei einem erfindungsgemäßen Batteriemodul können Brandschutzmittel vorgesehen sein. Diese ermöglichen das abschotten einzelner Batteriezellen die in einem Kühlmodul vorhanden sein können, gegeneinander und somit eine Ausbreitung eines Zellenbrands zwischen benachbarten Batteriezellen. Ferner erlauben Brandschutzmittel den Schutz von elektrischen bzw. elektronischen Bauteilen, z.B. eines Batteriemanagementsystems oder auch der Kühlleitung mittels derer Kühlflüssigkeit zum Kühlmodul transportiert wird. Dies ermöglicht auch eine fortlaufende Kühlung bzw. Steuerung des Batteriemoduls trotz eines Brandes einer Batteriezelle.

Die Eindämmung des Brandes durch die Brandschutzmittel trägt auch zur Lösung der Wiederherstellung des Batteriemoduls durch austauschen der defekten Bauteile.

Bevorzugt sind die Brandschutzmittel im Bereich der flächigen Elemente, vorzugsweise im Bereich zwischen den flächigen Elementen und den Batteriezellen angeordnet sind, und/oder die Brandschutzmittel sind zwischen Kühlflügeln eines eine Etage bildenden Strangpresselements vorgesehen, das die Seitenteile und die Strömungskanäle der Etage definiert, und/oder die Brandschutzmittel insbesondere blattförmige Brandschutzmittel sind. Solch eine Anordnung verbessert die Eindämmung der Ausbreitung eines Zellenbrandes bzw. des Batteriemanagementsystems.

Typischerweise schäumen die Brandschutzmittel unter Temperatureinwirkung auf und umfassen bevorzugt ein Brandschutzmittel auf Blähgraphitbasis, wobei die Brandschutzmittel insbesondere im Bereich der flächigen Elemente angeordnet sind.

Solche Materialien schäumen nach einer durch eine Temperatureinwirkung induzierten Reaktion unter einem Druck von mindestens drei, bevorzugt zumindest im Wesentlichen vier, Bar bei einer Temperatur von 300°C auf. Die Reaktion findet erst bei Temperaturen von über 100°C bevorzugt erst bei Temperaturen von über 200°C statt, sodass sichergestellt werden kann, dass die Materialien erst bei einem Brand aufschäumen.

Ein solches Brandschutzmittel, welches vorzugsweise im Bereich der flächigen Elemente und insbesondere zwischen Batteriezellen angeordnet ist, bildet im Brandfall ein weiche zusammenhängende Masse, die nebeneinander angeordnete Batteriezellen vor einem Brandübergriff schützen. Ferner führt eine weiterhin steigende Temperatur zu einer weiteren Vergrößerung der Blähkörpermasse und verhindert so in der Regel einen Übergang von Feuer zwischen einzelnen Batteriezellen bzw. zwischen Batteriezellen die in einzelnen Fächern eines Kühlmoduls angeordnet sind. Solche Brandschutzmaterialien werden z.B. unter den Handelsbezeichnungen Kerafix® Flexting 100 bzw. ROKU® Strip F 115 vertrieben.

Bei einem weiteren Aspekt können Dämpfungsmittel vorgesehen sein. Hierbei können die Batteriezellen dichter bzw. sicherer im Batteriemodul untergebracht werden. Somit können die Batteriezellen nicht relativ zueinander bewegt werden, so sind sie auch besser gegen externe Stoßkräfte und Erschütterungen die im Fahrbetrieb auftreten geschützt und mechanische Spannungen werden im Batteriemodul gleichmäßiger verteilt.

Gemäß einer vorteilhaften Ausführungsform sind die, vorzugsweise blattförmigen und optional aus Schaumstoff bestehenden, Dämpfungsmittel im Bereich der Räume zur Aufnahme der Batteriezellen, vorzugsweise zwischen benachbarten Batteriezellen und auf der Außenseite der obersten und der untersten Batteriezelle des Moduls angeordnet. Hierbei kann großflächig eine Dämpfung zwischen einzelnen Batteriezellen oder Paaren von Batteriezellen vorgesehen werden, um eine noch gleichmäßigere Verteilung der im Betrieb herrschenden Spannungen zu gewährleisten.

Vorzugsweise bestehen die Dämpfungsmittel aus einem Schaumstoff und sind flächig auf einzelnen Batteriezellen angeordnet, um diese mit einer definierten Kraft vorzuspannen. Gegebenenfalls kann eine solche Schaumstofflage auch auf den obersten und untersten Zellen eines Batteriemoduls angebracht werden. Die Schaumstofflage führt zu einer Dämpfung innerhalb des Kühlmoduls und dient zur zusätzlichen mechanischen Fixierung von Batteriezellen innerhalb des Kühlmoduls.

Hierzu wird z.B. ein Silikonschaum mit einer definierten Kompressionsfestigkeit in einer definierten Anordnung und Größe (Fläche und Dicke des Materials) auf die Batteriezellen aufgebracht, um diese mit einer definierten Kraft vorzuspannen. Hierbei werden die Batteriezellen vor äußeren Einwirkungen wie z.B. Stößen geschützt.

Bevorzugt umfassen die schaumartigen Dämpfungsmittel einen schaumartigen Silikon. Solche Dämpfungsmittel werden z.B. unter den Handelsbezeichnungen BISCO® BF-1000 vertrieben.

Besonders bevorzugt sind die Dämpfungsmittel ebenfalls aus einem Brandschutzmaterial hergestellt sind. Somit kann ein solches Kühlmodul ein Brandschutzmittel zwischen jeder Batteriezelle aufweisen. Dies bedeutet, dass jede Batteriezelle vor einer gegebenenfalls brennenden benachbarten Batteriezelle besser abgeschottet werden kann.

Bei einem weiteren Aspekt kann eine Einrichtung vorgesehen sein, die eine Temperatur der Batteriezellen und/oder eine Ausdehnung der Batteriezellen messen kann.

Die Lebensdauer der Batteriezellen kann insbesondere dadurch verlängert werden, dass die Batteriezellen bei einer möglichst konstanten Temperatur betrieben werden, durch die Messung der Temperatur und/oder der Ausdehnung kann die Entwicklung eines Batterieverhaltens noch genauer ermittelt und beobachtet werden. Auch hier kann im Falle eines auftretenden Defekts das Batteriemodul rechtzeitig ausgetauscht und im Herstellerwerk wieder hergestellt werden.

Nach einem besonders bevorzugten Ausführungsbeispiel der Erfindung umfasst die Einrichtung eine Flexleiter, an welche Sensoren angeschlossen sind, die die Temperaturen der Batteriezellen und/oder die Ausdehnung der Batteriezellen messen. Vorzugsweise sind die Sensoren zwischen benachbarten Batteriezellen angeordnet.

Sensoren die auf einem Flexleiter angeordnet sind, sind einfach miteinander verbunden und können mittels einer Mutliplex Leitung an das Batteriemanagementsystem angeschlossen werden, somit werden Kontakte, Platz und Fehlerquellen gespart bzw. minimiert, wobei ein noch zuverlässigerer Betrieb des Kühlmoduls gewährleistet wird. Im Übrigen wird durch die Anwendung einer Flexleiter das entsprechende Messsystem auch besser gegen Stöße und Erschütterungen geschützt, da die Sensoren innerhalb der Flexleiter gegen äußere Einflüsse abgeschirmt werden.

Ferner ermöglichen die Sensoren durch, Ihre Anordnung zwischen benachbarten Batteriezellen, eine noch genauere Auslese der Temperatur. Durch die zusätzliche und/oder alternative Messung einer möglichen Veränderung des Abstands zwischen zwei benachbarten Batteriezellen kann auch ermittelt werden, ob sich die Größen der Batteriezellen zeitlich verändert.

Bei einem bevorzugten Ausführungsbeispiel besteht die Einrichtung zum Messen einer Ausdehnung der Batteriezellen aus sich gegenüberliegenden Kontaktflächen und Abstandshaltern aus Kunststoff, die die Kontaktflächen im nicht ausgedehnten Zustand der Batteriezellen beabstandet voneinander halten.

Sollte nun eine Batteriezelle sich ausdehnen, da es Probleme mit dieser Batteriezelle gibt, drückt die sich ausdehnende Batteriezelle auf die eine Kontaktfläche und schiebt diese in die Richtung der zweiten Kontaktfläche. Der sich ändernde Abstand bewirkt eine Veränderung der Kapazität zwischen den Kontaktflächen die gemessen werden kann und ermöglicht so eine Aussage über die Ausdehnung einer oder mehrerer Batteriezellen.

Ferner kann durch den Kontakt der beiden Kontaktflächen ein Kurzschluss erzeugt, der dem Batteriemanagementsystem anzeigt, dass ein Problem aufgetreten ist.

Vorteilhafterweise bestehen die Etagen aus stapelbaren Etagenelementen, die aufeinander gestapelt sind. Hierbei besteht ein Etagenelement aus einem ersten und einem zweiten, je mindestens einen Strömungskanal aufweisendem Seitenteil sowie aus zumindest einem flächigen Element das/die sich zwischen den Seitenteilen erstreckt/erstrecken. Somit kann ein Kühlmodul modular aufgebaut werden, und auch einfach im Werk zwecks Reparatur bzw. Recycling wieder auseinander genommen werden können.

Vorzugsweise sind Halterungsfedern vorgesehen sind, die die stapelbaren Etagenelementen aneinander halten. Die Halterungsfedern sichern nicht nur von außen das Kühlmodul von einem ungewollten öffnen ab, sondern sie ermöglichen auch einen Gegendruck von außen zu erzeugen, mittels dem die Dämpfungsmittel vorgespannt werden können. Um den unteren und oberen Abschluss des Kühlmoduls zu gewährleisten, ist das Kühlmodul an der oberen Seite mit einem nach innen vorgewölbten Deckel und/oder am unteren Seite mit einem nach innen vorgewölbtem Boden versehen.

Vorzugsweise ist das Kühlmodul an mindestens drei Seiten von einem Gehäuse umgeben ist, das mit mindestens einem Berstbereich ausgestattet ist. Sollte es im Brandfalle zu einem Überdruck im Gehäuse eines Kühlmoduls kommen, kann dieser kontrolliert durch die durch den Berstbereich bereitgestellte Sollbruchstelle entweichen.

Um den Wärmeübergang einer Kühlflüssigkeit in einem Kühlmodul positiv zu beeinflussen wird ein sogenannter Turbulator in mindestens einem Strömungskanal auf der Eingangsseite und/oder auf der Ausgangsseite vorgesehen. Vorzugsweise weist ein Kühlmodul Isolierschalen auf, die zwischen Batteriezellen und flächigen Elementen vorgesehen sind, wobei vorzugsweise je eine Batteriezelle auf jeder Isolierschale aufgeklebt ist. Die Isolierschalen ermöglichen eine elektrische Isolation zwischen benachbarten Batteriezellen und zum Kühlmodul.

Erfindungsgemäß ist mindestens eine Platine eines Batteriemanagementsystems zum Betrieb eines Batteriemoduls vorgesehen. Eine elektrische Verbindung wird zwischen der Platine und den elektrischen Kontakten der Batteriezellen mittels Federkontakten hergestellt, wobei die Federkontakte zwischen leitenden Abstandselementen und der Platine vorgesehen sind, wobei die Federkontakte durch Haarnadelfedern gebildet sind.

Vorzugsweise können die Federkontakte einen redundanten Messpfad des Batteriemanagementsystems bilden.

Typischerweise werden Platinen mittels Schrauben an die Batteriezellen oder deren Abstandshalter befestigt, da die Schrauben manchmal nur einen unzureichenden elektrischen Kontakt herstellen kann dieser im Betrieb des Kühlmoduls verloren gehen. Um nun einen sicheren Betrieb des Kühlmoduls weiterhin gewährleisten zu können, wird die Kontaktfeder zwischen einem Kontaktpunkt der Platine und den leitenden Abstandselementen eingefügt. Sollte der ursprüngliche Kontakt ausfallen bildet die Feder einen weiteren, redundanten Messpfad, der entweder zusätzlich oder im Austausch benützt werden kann.

Erfindungsgemäß sind Nuten in den leitenden Abstandselementen vorgesehen, und jede Haarnadelfeder weist an einem Schenkel einen Vorsprung auf, der in einer jeweiligen Nut eines Abstandselements gehalten ist, um den elektrischen Kontakt zwischen der Platine und den leitenden Abstandselementen, zumindest unterstützend, bereitzustellen. Eine so geformte Feder kann beim bestücken einer (Bus-) Platine eines Batteriemoduls einfach in die vorgesehene Nut eingeführt werden und dadurch automatisch positionsfest vorgesehen werden.

Vorteilhafte Ausführungsformen der Erfindung sind in den Unteransprüchen, der Beschreibung und den Figuren beschrieben.

Die Erfindung wird nachfolgend anhand von Ausführungsbeispielen unter Bezugnahme auf die Zeichnung näher erläutert, in welcher zeigen:

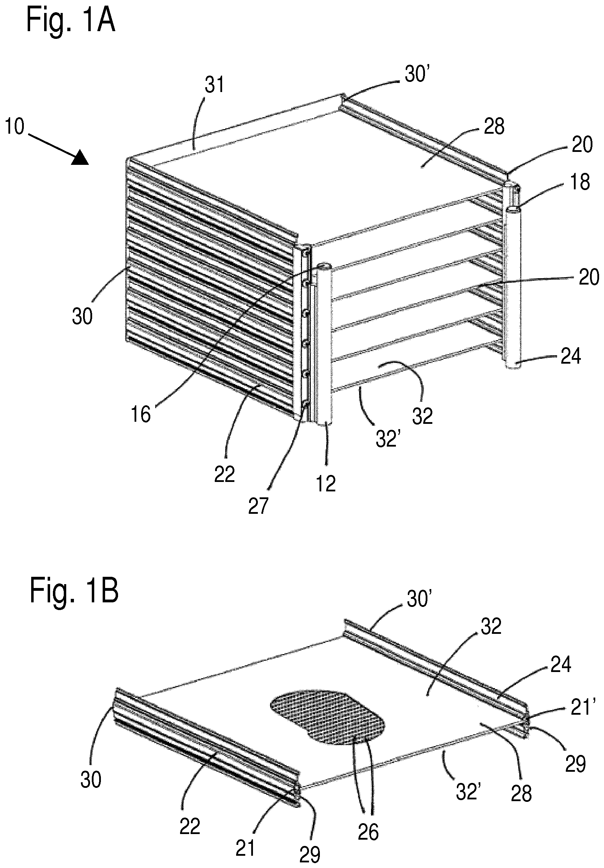

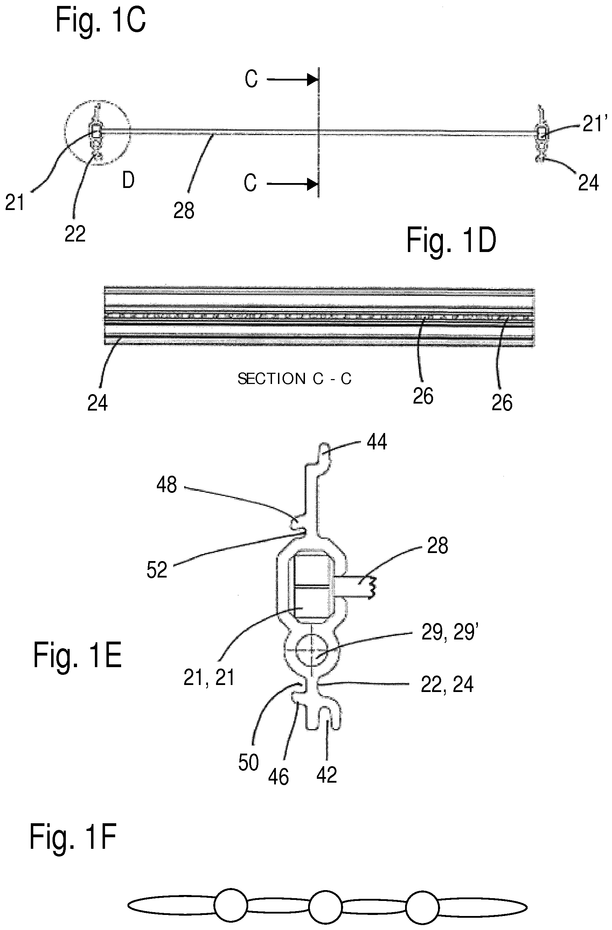

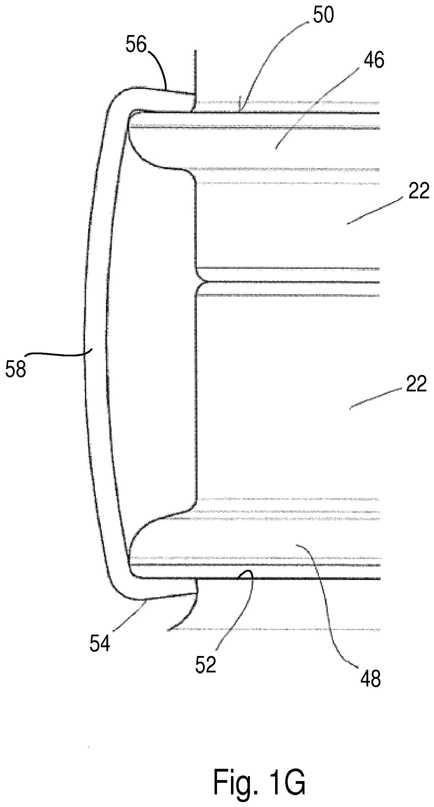

- Fig. 1A bis 1G: Darstellungen eines ersten Kühlmoduls, wobei die Fig. 1A eine perspektivische Darstellung des Kühlmoduls; die Fig. 1B eine perspektivische Darstellung eines Etagenelements des Kühlmoduls, Fig. 1C eine vordere Ansicht des Etagenelements der Fig, 1A; die Fig.1D ein vergrößerter Schnitt entsprechend der Schnittlinie C-C der Fig. 1C; die Fig. 1E eine vergrößerte perspektivische Darstellung eines Endes des Hohlprofils des Seitenteils des Etagenelements der Fig. 1C; Fig. 1F eine mögliche Ausgestaltung eines Turbulators und die Fig. 1G eine Befestigungsmöglichkeit von zwei Seitenteilen aneinander.
- Fig. 2A bis 2C: Darstellungen entsprechend den Fig. 1B bis 1D von einer weiteren Form eines Etagenelements,
- Fig. 3A bis 3C,: Darstellungen entsprechend den Fig. 1B bis 1D von einer weiteren Form eines Etagenelements,
- Fig. 4A bis 4C: Darstellungen entsprechend den Fig. 1B bis 1D von einer weiteren Form eines Etagenelements,
- Fig. 5A & 5B: Darstellungen weiterer Kühlmodule, wobei die Fig. 5A ein Kühlmodul mit installierten Kühlblechen und Fig. 5B ein ähnliches Kühlmodul mit integrierten Kühlflügeln zeigen,
- Fig. 6A & 6B: Explosionszeichnungen der in den Fig. 5A & 5B verwendeten Etagenelemente mit zwei einzusetzenden Batteriezellen,
- Fig. 7: eine perspektivische Darstellung einer Isolierschale,
- Fig. 8: eine perspektivischer Darstellung eines Etagenelements mit zwei eingesetzten Batteriezellen und zwei eingesetzten Isolierschalen,
- Fig. 9: eine perspektivische Darstellung eines Kühlmoduls mit eingesetzten Batteriezellen,
- Fig. 10: eine perspektivische Darstellung eines Etagenelements mit eingesetztem Brandschutzelement,
- Fig. 11: eine perspektivische Darstellung eines Etagenelements mit einer Schaumstoffauflage,
- Fig. 12A bis 12C: eine perspektivische Darstellung eines Gehäuses mit einem Gehäusedeckel mit konkaver Wölbung,
- Fig. 13A & 13B: eine perspektivische Darstellung einer Seite des Gehäuses der Fig. 12A von der Innenseite gesehen bzw. eine vergrößerte Schnittzeichnung dieser Seite im eingekreisten Bereich,
- Fig. 14A & 14B: Fig. 14A zeigt eine Darstellung eines Batteriemoduls mit einer installierten Platine eines Batteriemanagementsystem und die Fig. 14B zeigt eine schematische Darstellung der Anbringung einer Platine eines Batteriemanagementsystems an Batteriezellen eines Kühlmoduls,
- Fig. 15A & 15B: schematische Darstellungen eines Temperatur- bzw. Wachstumsfühlers zwischen benachbarten Batteriezellen eines Batteriemoduls.

Merkmale, die die gleiche oder eine ähnliche Funktion haben, werden nachfolgend mit den gleichen Bezugszeichen versehen, und es versteht sich von selbst, dass die Beschreibung, die für Bauteile oder Bauteilfunktionen im Zusammenhang mit einer Ausführungsform gegeben werden, auch für andere Ausführungsformen gelten, bei denen die gleichen Bezugszeichen verwendet werden, es sei denn, dass etwas Gegenteiliges erwähnt wird.

Die Fig. 1A zeigt eine perspektivische Darstellung eines Batteriemoduls 1 mit einem erfindungsgemäßen Kühlmodul 10. Das in normalem Betrieb zur Kühlung der Batteriezellen 11 des Batteriemoduls 1 verwendet wird, das aber bei niedrigen Außentemperaturen auch dazu verwendet werden kann, die Batteriezellen 11 zu erwärmen.

Das Kühlmodul 10 hat eine im Wesentlichen quaderförmige Form und weist in seinem Eingangsbereich einen Verteiler 12 und in seinem Ausgangsbereich einen Sammler 14 auf. Der Verteiler 12 und der Sammler 14 weisen jeweils einen Anschluss bzw. Tülle 16, 18 auf, durch den das Kühlmittel zu- bzw. abgeführt werden kann.

Das Kühlmodul 10 setzt sich aus mehreren Etagenelementen 20 zusammen, wobei im Beispiel der Fig. 1A sechs Etagenelemente 20 aufeinander gesetzt bzw. aufgestapelt werden, um das Kühlmodul 10 zu bilden. Das Kühlmodul 10 ist insbesondere ein Kühlmodul einer aus mehreren Zellen bestehenden wiederaufladbaren Batterie, wie z.B. einer Lithiumionenbatterie, wobei die Zellen in Fig. 1 nicht ersichtlich sind. Konkret besteht wie aus den Fig. 1B bis 1E ersichtlich jedes Etagenelements 20 aus einem ersten und einem zweiten, je mindestens einen Strömungskanal 21 bzw. 21' aufweisenden Seitenteil 22, 24 sowie aus einer Kühlkanäle 26 aufweisenden Verbindungseinrichtung 28, deren Kühlkanäle 26 sich zwischen den Strömungskanälen 21, 21' der Seitenteile 22, 24 erstrecken. Die Seitenteile 22 und 24, die im Querschnitt gleich sind und aus einem Strangpressteil geschnitten werden können, sind im Querschnitt in Fig. 1E gezeigt.

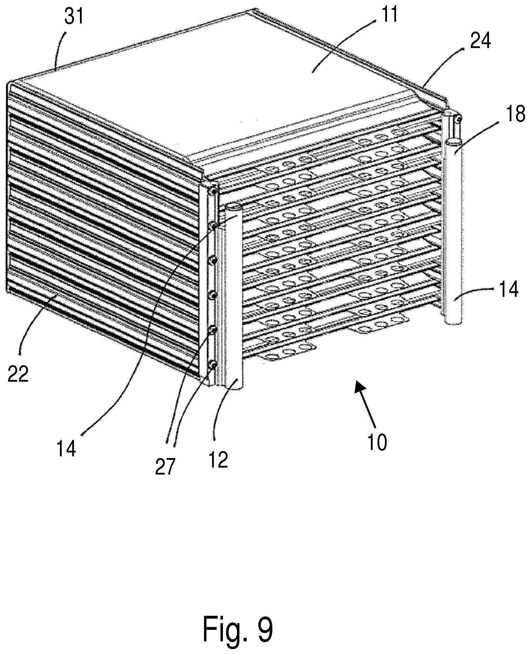

Die oben erwähnten Verteiler 12 und Sammler 14 werden stirnseitig an die entsprechenden Seitenteile 22 bzw. 24 angebracht, und zwar durch Schrauben 27, die durch geeignete Stellungen des Verteilers und des Sammlers in die Passagen 29, 29' der Seitenteile 22 und 24 eingreifen (siehe Fig. 9), wobei Dichtungen 25 zwischen dem Verteiler 12 und dem Seitenteil 22 und zwischen dem Sammler 14 und dem Seitenteil 24 vorgesehen sind und der Verteiler 12 und der Sammler 14 Öffnungen aufweisen, die mit den Strömungskanälen 21 bzw. 21' kommunizieren. Die Strömungskanäle 21, 21' und die Schraubpassagen 29, 29' der Fig. 1E sind durch jeweilige längliche Hohlpassagen des Strangpressteils der Fig. 1E gebildet. Wie aus Fig. 1A ersichtlich wird an der dem Verteiler bzw. dem Sammler gegenüberliegenden Rückseiten 30, 30' der Seitenteile eine durchgehende Platte 31 mittels weiterer Schrauben (nicht gezeigt) abdichtend befestigt, die ebenfalls in die Schraubpassagen 29, 29' eingreifen. Die Platte 31 versteift ein so zusammengefügtes Kühlmodul 10 und dichtet die Rückseiten der Strömungskanäle 21, 21' der Seitenteile 22, 24 ab.

Denkbar ist auch eine Auslegung in der ein jeweiliges Seitenteil 22, 24 einen eigenen Sammler 12 und einen eigenen Verteiler 14 an einem jeweiligen Ende des Seitenteils 22, 24 aufweist (nicht gezeigt). D.h. dass die Kühlflüssigkeit jeweils nur durch einen Strömungskanal 21, 21' eines jeden Seitenteils 22, 24 zwischen einem eigenen Sammler 14 und einem eigenen Verteiler 12 fließt.

Ferner besteht auch die Möglichkeit, dass ein Seitenteil 22 an einem Ende mit dem Verteiler 12 verbunden wird und der Sammler 14 am zweiten Seitenteil 24 am dem Verteiler 12 gegenüberliegenden Ende des zweiten Seitenteils 24 angebracht wird (auch nicht gezeigt).

Die Auslegung des Verteilers 12 und des Sammlers 14 kann genauso erfolgen, wie in der WO2012/028298 im Detail beschrieben und hier in der Fig. 9 gezeigt ist. Der diesbezügliche Inhalt der WO2012/028298 wird hierdurch zum Teil der vorliegenden Anmeldung gemacht.

Die Strömungskanäle 20, 20' der Seitenteile 22 bzw. 24 sind in diesem Beispiel an den Rückseiten 30, 30' der Seitenteile 22 bzw. 24 durch (nicht gezeigten) angeschraubte abgedichtete Leisten oder angeklebte oder angeschweißte Leisten oder einzelne Stopfen, die in die Strömungskanäle 21, 21' an den Rückseiten 30, 30' eingesetzt werden oder anderweitig fluiddicht verschlossen.

Die Verbindungseinrichtung 28 ist in etwa in der Mitte jedes Seitenteils 22 bzw. 24 angesetzt und bildet, wie aus der Fig. 1B ersichtlich, je einen Freiraum 32, 32' oberhalb und unterhalb der Verbindungseinrichtung 28 und zwischen den Seitenteilen 22 und 24. Um die Kühlkanäle 26 der Verbindungseinrichtung 28 strömungsmäßig mit den Strömungskanälen 21, 21' der Seitenteile 22 bzw. 24 zu verbinden, werden entweder die Wandbereiche der Seitenteile 22 bzw. 24, die die Strömungskanäle definieren, mit einem durchgehenden Schlitz versehen, in den die entsprechende Seite der Verbindungseinrichtung 28 eingesetzt wird, oder die Strömungskanäle 21, 21' werden als allseitig geschlossene Hohlräume angefertigt und die Seitenwand ausgefräst, um einen Schlitz zu bilden, der die entsprechende Seite der Verbindungseinrichtung 28 aufnimmt. Letztere ist die bevorzugte Lösung, da man dann eher sichergehen kann, dass eine fluiddichte Verbindung an den formangepassten Enden der Schlitze erfolgt.

Bei der fertigen Konstruktion, wie in der Fig. 1A dargestellt, wird somit ein Pfad für die Kühlflüssigkeit geschaffen, der wie folgt verläuft:
Die Kühlflüssigkeit wird mittels einer Pumpe (nicht gezeigt) einem Vorrat (ebenfalls nicht gezeigt) entnommen und über eine nicht dargestellte Leitung in die Eingangstülle 16 des Verteilers 12 eingespeist. Der innere Hohlraum des Verteilers 12 kommuniziert mit den sechs aufeinander gestapelten Seitenteilen 22, so dass eine gleichmäßige Strömung in jeden Strömungskanal 21 der sechs Seitenteile 22 erfolgt. Von den Strömungskanälen 21 geht die Kühlflüssigkeit ebenfalls gleichmäßig in die einzelnen Kühlkanäle 26 der Verbindungseinrichtungen 28 über und durchströmt diese. An den Enden der Kühlkanäle 26 benachbart zum Seitenteil 24 strömt die Kühlflüssigkeit in die Strömungskanäle 21' der Seitenteile 24 und von dort in den inneren Hohlraum des Sammlers 14. Von dort verlässt die Kühlflüssigkeit den Sammler 14 über die Ausgangstülle 18 und fließt über eine nicht dargestellte Leitung und mindestens einen nicht gezeigten Wärmetauscher in den Vorratsbehälter zurück.

Mit anderen Worten ist das Kühlmodul 10 so konzipiert, dass die Strömungskanäle jedes Seitenteils auf der Eingangsseite des Kühlmoduls mit einem Kühlflüssigkeit führenden Verteiler 12 und die Strömungskanäle jedes Seitenteils auf der Ausgangsseite des Kühlmoduls 10 mit einem Kühlflüssigkeit führenden Sammler 14 in Fluidverbindung steht.

Wie ersichtlich sind die Etagenelemente 20 in Draufsicht vorzugsweise quadratisch oder rechteckig, sie könnten aber stattdessen eine andere Form wie eine dreieckige Form in Draufsicht aufweisen.

Die Konstruktion gemäß den Fig. 1A bis 1E kann aus ersten und zweiten extrudierten oder spritzgegossenen Seitenteilen 22, 24 in Form von Kunststoffprofilen, sowie einer extrudierten oder spritzgegossenen, dünnwandigen Verbindungseinrichtung 28, mit mehreren im Vergleich zu dem Querschnitt der Strömungskanäle 21, 21' kleineren Querschnitten aufweisenden Kühlkanälen 26, wobei die Seitenteile 22, 24 und die Verbindungseinrichtung 28 durch Heißgas- oder Ultraschallschweißen aneinander befestigt werden. Der Kunststoff, der hier für die Seitenteile und die Verbindungseinrichtung verwendet wird, ist bspw. Polyamid.

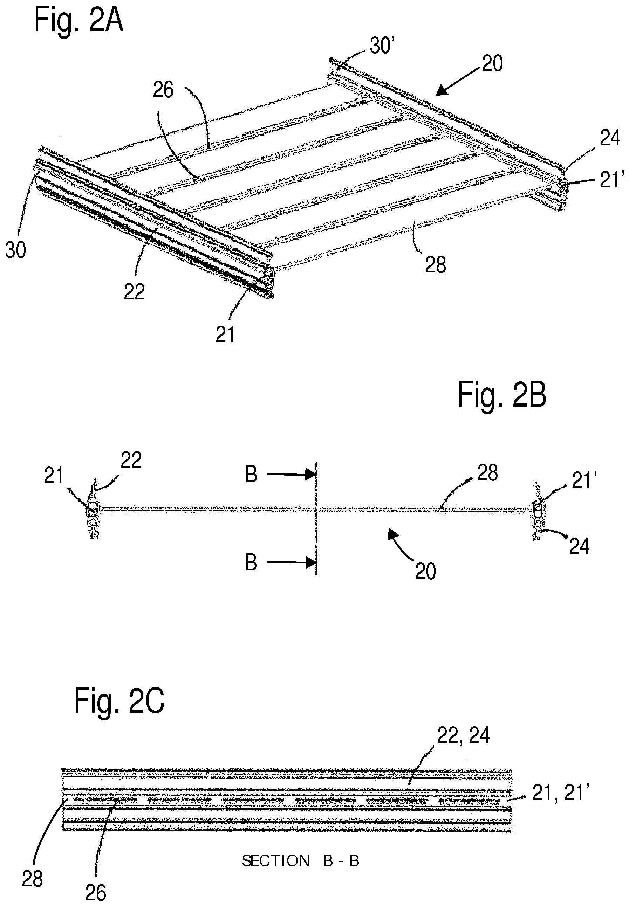

Die Fig. 2A bis 2C zeigen eine alternativ Lösung, die von der Form betrachtet der Lösung gemäß Fig.1A bis 1E ganz ähnlich ist. Der Unterschied liegt darin, dass hier die ersten und zweiten als Strangpressprofile ausgebildeten Seitenteile 22 und 24 aus Metall, z.B. Al, Cu, oder Mg oder eine Legierung mit Al, Cu oder Mg, mit einer dünnwandigen, hartgelöteten bzw. geklebten oder geschweißten Verbindungseinrichtung 28, ebenfalls aus Metall, vorzugsweise aus dem gleichen Metall, mit mehreren in Vergleich zu dem Querschnitt der Strömungskanälen 21, 21' kleineren Querschnitten aufweisenden Kühlkanälen 28, wobei die Seitenteile und die Verbindungseinrichtung durch Löten, Schweißen oder Kleben aneinander befestigt werden. Denkbar wäre es auch eine spritzgegossene Verbindungseinrichtung 28, bspw. gemäß Fig. 1B, mit Seitenteilen aus Metall gemäß Fig. 2A zu verwenden oder auch umgekehrt, um ein Etagenelement 20 zu realisieren.

Die Verbindungseinrichtung 28 könnte auch aus mehreren vorzugsweise nebeneinander und Parallel zueinander angeordneten kleineren Strangpressprofilen bestehen, die Mikrokanäle aufweisen.

Man kann die Konstruktion gemäß den Fig. 2A bis 2C wie folgt zusammenfassen:
Es liegen seitliche Strangpressprofile 22, 24 aus Metall wie z.B. Aluminium vor, die mit einer dünnwandigen, hartgelöteten Kühlplatte 28 mit Mikrokanälen 26 aneinander verbunden werden. Die Verbindung der drei Teile 22, 24 und 28 erfolgt durch Löten, Schweißen oder Kleben.

Auch hier erfolgt die Verteilung im fertigen Modul 10 über Manifolds 12, 14 auf der einen Seite des Moduls 10, während der Abschluss der Profile 22, 24 mittels einer Platte 31 (hier nicht gezeigt) auf den Rückseiten 30, 30' der Seitenteile 22, 24 bzw. des Kühlmoduls 10 bewerkstelligt wird.

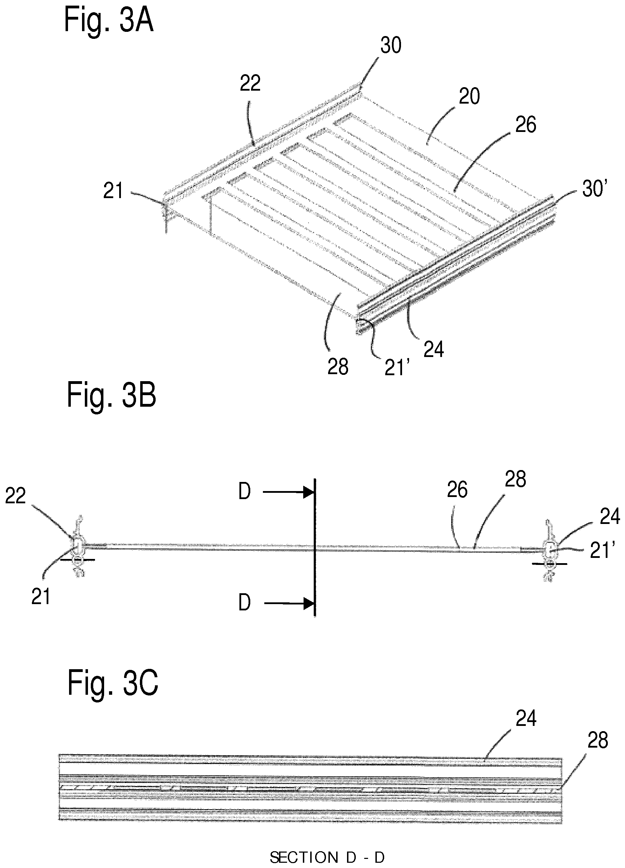

In einer weiteren Variante kann das Etagenelement 20, wie in den Fig. 3A bis 3C gezeigt, als Druckgussteil realisiert werden, üblicherweise aus Aluminium, aus einer Aluminiumlegierung wie LM 40 oder aus Magnesium oder einer Magnesiumlegierung wie AlMg.

Man kann die Druckgussausführung gemäß den Fig. 3A bis 3C wie folgt zusammenfassen:
Es liegt ein Kühlkörper 22, 24, 28 in Druckgussausführung vor, wobei die Hauptströmungskanäle 21 bzw. 21' über Schieber realisiert werden. Auch die offenen Querkanäle 26 werden mittels Schiebern hergestellt. Als Schieber werden bewegliche Einsätze einer Druckgussform verstanden, die bei der Fertigung des Druckgussteils in der Form hineingefügt und zur Freigabe des Teils aus der Druckgussform herausgezogen werden.

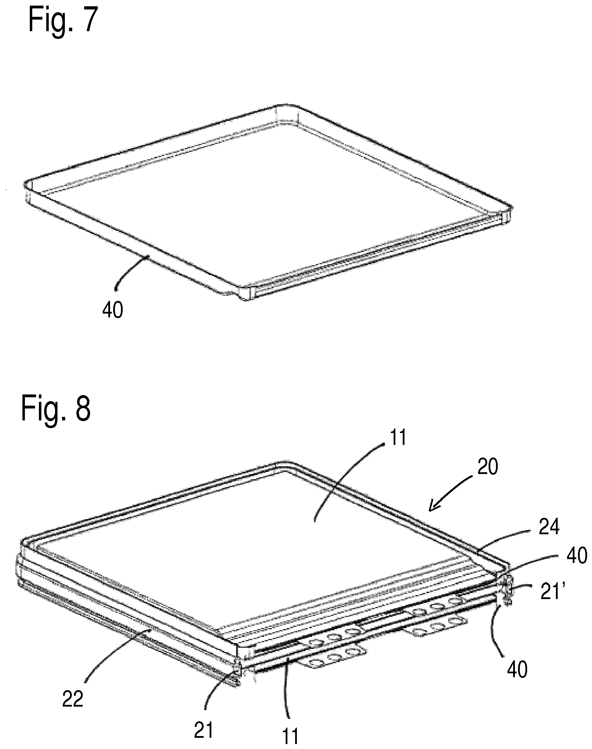

Die offenen Querkanäle 26 werden auf der Oberseite und der Unterseite in Fig. 3A bis 3C mittels plattenförmigen Elementen verschlossen, um geschlossene Kühlkanale zu formen. Eine mögliche Ausgestaltung der plattenförmigen Elemente wird in der Form von Isolierschalen 40 in der Fig. 7 näher beschrieben.

Auch hier erfolgt die Verteilung der Kühlflüssigkeit im Kühlmodul 10 über Manifolds 12, 14 auf der vorderen Seite, und es erfolgt der Abschluss der Profile 22, 24 mit einer Platte 31 auf der Rückseite, wie oben beschrieben.

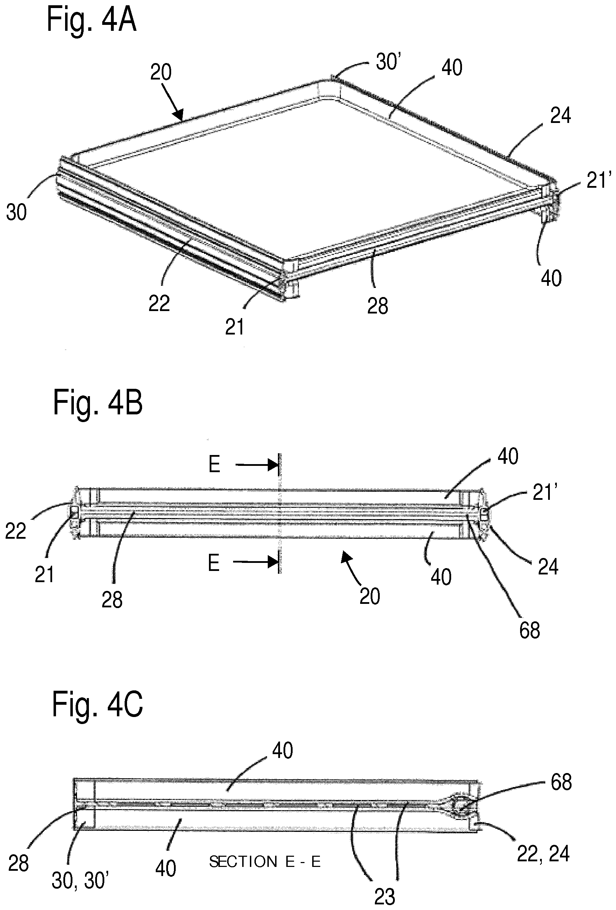

Die Fig. 4A bis 4C zeigen eine Konstruktion ähnlich den Fig. 3A bis 3C bei der geöffnete Bereiche 23 in der Verbindungseinrichtung 28 vorgesehen sind (Fig. 4C). Die geöffneten Bereiche 23 der Verbindungseinrichtung 28 bilden offene Kühlkanäle der Verbindungseinrichtung 28. Um die offenen Kühlkanäle nach oben bzw. nach unten abzudichten wird z.B. eine Isolierschale 40 (siehe Fig. 7) jeweils von oben bzw. von unten auf die Verbindungseinrichtung 28 mittels eines geeigneten Klebstoffs geklebt (siehe Fig. 4B und Fig. 4C für eine mit Isolierschalen 40 versehene Verbindungseinrichtung), auch ist eine andersartige Verbindung der Isolierschalen 40 mit der Verbindungseinrichtung denkbar. Die Isolierschale 40 ist vorzugsweise eine aus PET hergestellte Schale und die Verbindungseinrichtung 28 wird z.B. als ein Aluminiumdruckgussteil hergestellt.

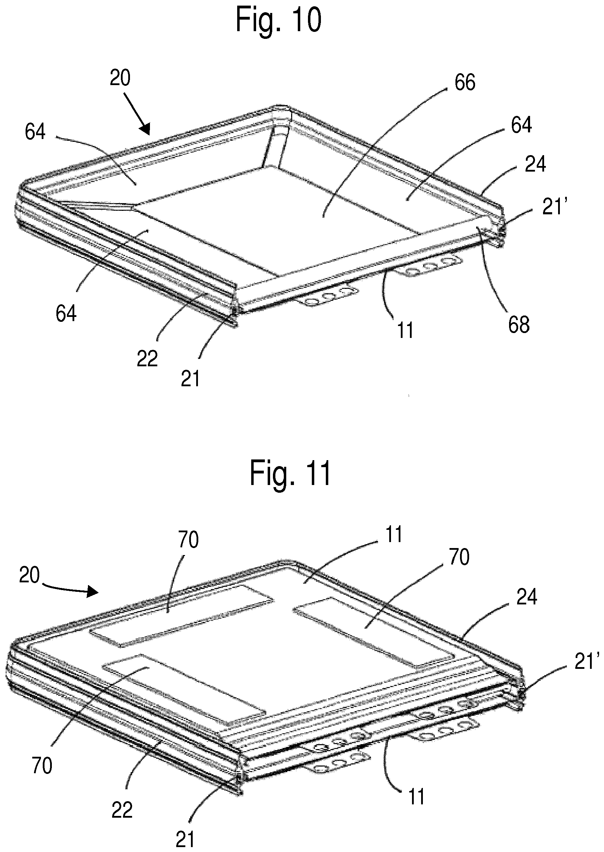

In der Fig. 4C ist ferner ein optionales, insbesondere aus GFK gefertigtes Rohr 68 (siehe auch die Fig. 10) zu sehen, welches zur Erzielung einer höheren Druckbelastbarkeit des Kühlelements (mechanischer Druck) verwendet werden kann. Zurückgehend auf die Fig. 1E ist ersichtlich, dass das Hohlprofil an einer Längsseite eine Nut 42 und auf der andere Längsseite eine Feder 44 aufweist, wobei bei der Bildung eines Stapels 45 der Hohlprofile die Feder 44 des einen Seitenteils 22 bzw. 24 des einen Etagenelements 20 in die Nut 42 des benachbarten Seitenteils 22 bzw. 24 eingefügt wird.

Ferner sieht man aus den Fig. 1E und 1G, dass das die Seitenteile 22 und 24 bildende Hohlprofil zwei seitliche Nasen 46 und 48 aufweist, die jeweils eine Nische 50, 52 bilden, in die die hakenförmigen Enden 54, 56 der im allgemeinen C-förmigen Federklammern 58 eingreifen, um den Stapel 45 zusammenzuhalten. Die Federklammern, ihre bevorzugte räumliche Anordnung und ihre Haltefunktion sind außerdem aus der Fig. 1A ersichtlich.

Die Strangpressteile, die in Fig. 1E und 1G gezeigt sind und Seitenteile 22 bzw. 24 bilden, weisen insgesamt folgende Merkmale auf:
a) an einer Längsseite eine U-förmige Nut 42,
b) an der anderen Längsseite eine Feder (bzw. einen Steg) 44, der in die U-förmige Nut eines benachbarten Seitenteils 22 bzw. 24 einpasst,
c) einen hohlen Bereich, der einen Strömungskanal 21, 21' definiert mit einer seitlichen Öffnung oder mehreren seitlichen Öffnungen, die eine Fluidverbindung zu einem weiteren Fluid führenden Element in Form der Kühlkanäle 26 aufweisende Verbindungseinrichtung 28 ermöglicht bzw. ermöglichen,
d) eine weitere sich in Längsrichtung des Seitenteils erstreckende Bohrung 29, 29' oder Passage zur Aufnahme eines Befestigungselements wie eine Schraube,
e) mindestens eine und vorzugsweise zwei seitlich abstehende Nasen 46, 48 auf der der seitlichen Öffnung bzw. den seitlichen Öffnungen entgegengesetzten Seite des Hohlprofils, d.h. auf der äußeren Seite des Seitenteils, wobei die Nase bzw. Nasen 46, 48 Nischen 50, 52 bilden, die zur Aufnahme der Haken 54, 56 von Halterungsfedern 58 ausgelegt sind, wobei die, vorzugsweise blattfederartige, Halterungsfedern 58 benachbarte Seitenteile 22 bzw. 24 aneinander halten, beispielsweise derart, dass die Feder 44 des einen Seitenteils in die Nut 42 des oder eines benachbarten Seitenteils hineingedrückt ist.

Anders ausgedrückt sind die Federklammern bzw. Haltefedern 58 deshalb vorgesehen, um die Seitenteile 22, 24 mindestens zweier übereinander gestapelter Etagenelemente 20 aneinander zu halten, wobei die Haltefedern 58 hakenförmige Enden 54, 56 haben, die in formangepassten Nischen 50, 52 der Seitenteile 22, 24 der Etagenelemente 20 eingreifen.

Ferner sieht man sogenannte Turbulatoren 60 in dem Strömungskanal 21, 21' der Fig. 1E. Es handelt sich um zusätzliche Teile, die in den Kanälen der Kühlprofile zur Reduzierung des Querschnittes eingesetzt werden. Ziel ist es, von einer laminaren Strömung zu einer turbulenten Strömung zu kommen und damit die Kühlperformance zu steigern. Mindestens einTurbulator kann in jedem Strömungskanal auf der Eingangsseite und/oder auf der Ausgangsseite vorgesehen werden. Der durch den bzw. die Turbulatoren ansteigende Druckabfall muss bei der Auslegung beachtet werden.

Fig. 1F zeigt eine mögliche Ausgestaltung eines Turbulators 60, mit abwechselnd angeordneten kugelartigen Bereichen größeren Durchmessers und zylindrischen Abschnitten kleineren Durchmessers. Insbesondere sind die Turbulatoren so gestaltet, dass diese eine ständige Wiederholung zwischen verringertem und vergrößertem Querschnitt aufweisen.

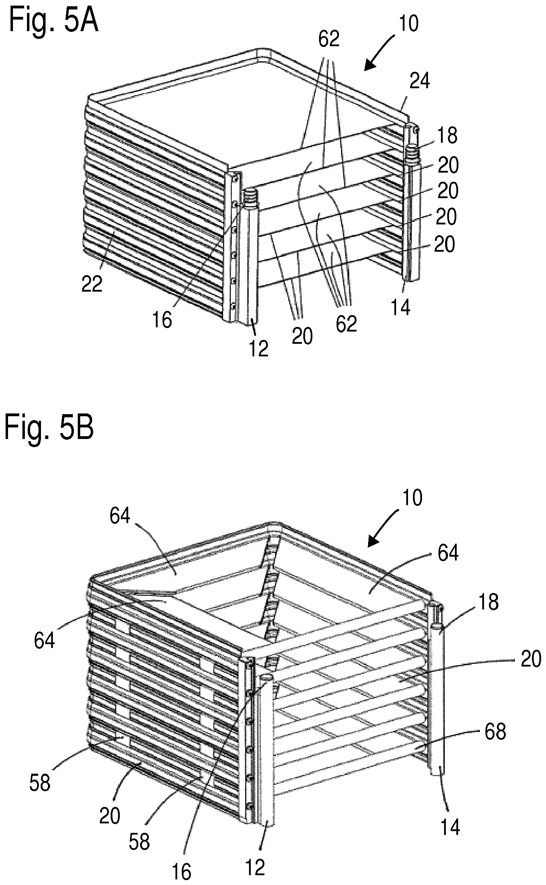

Die Fig. 5A & 5B zeigen Darstellungen weiterer Kühlmodule 10. Die Fig. 5A zeigt ein Kühlmodul 10 mit installierten Kühlblechen 62 und Fig. 5B ein ähnliches Kühlmodul 10 mit integrierten Kühlflügeln 64, deren Konstruktion gemäß der WO2012/028298 ist. Jede Etage 20 umfasst zumindest ein erstes und ein zweites, je mindestens einen Strömungskanal 21, 21' aufweisendem Seitenteil 22, 24, welche durch einen zu einem U gebogenen Strangpressprofil geformt sind, sodass ein dreiseitiges Etagenelement 20 mit einem durchgehenden Strömungskanal 21 gebildet ist, sowie aus mindestens einem im Wesentlichen flächigem Element 28 das sich zwischen den Seitenteilen 22, 24 erstreckt. Zwischen den benachbarten mindestens einem flächigem Element 28 benachbarter Etagen 20 ist ein innerer Raum 32, 32' gebildet und die Räume sind zur Aufnahme der Batteriezellen 11, insbesondere von flachen, rechteckigen oder quadratischen Batteriezellen, ausgelegt.

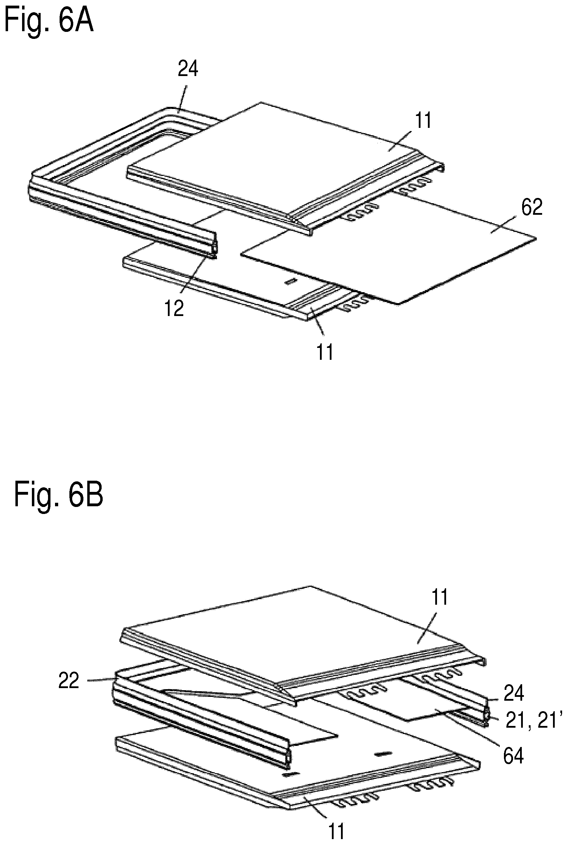

Die Fig. 6A & 6B zeigen Explosionszeichnungen der in den Fig. 5A & 5B verwendeten Etagen mit zwei einzusetzenden Batteriezellen.

Die in der Fig. 5A und 5B gezeigte Konstruktion ist zwar für sich bekannt, kann aber mit den hier beschriebenen mitteln modifiziert werden, um ein verbessertes Kühlmodul 10 zu bilden, z. B. können die Kühlmodule 10 gemäß Fig. 5A & 5B etagenweise aufgebaut werden, unter Verwendung von Seitenteilen, die mit entsprechenden Nasen 46, 48 gemäß Fig. 1E versehen sind, damit die einzelnen Etagen 20 mit Halteklammern 58 zusammen gehalten werden können.

Ein Beispiel für die oben erwähnten Isolierschalen 40 ist in der Fig. 7 gezeigt. Die Isolierschalen können einerseits mit dem Kühlmodul 10 gemäß einer der Figuren 1A bis 1G, 2A bis 2C, 3A bis 3C 4A bis 4C, bei denen Kühlkanäle 26 aufweisende Verbindungsplatten 28 zum Einsatz gelangen, andererseits auch mit Kühlmodulen 10 gemäß Fig. 5A oder 5B verwendet werden.

Die Isolierschalen 40 dienen verschiedenen Zwecken. Zum Beispiel bei einem Kühlmodul 10 gemäß Fig. 3A bis 3C bzw. 4A bis 4C werden sie an der Verbindungseinrichtung 28 befestigt, z. B. mittels eines Klebstoffs, und dienen somit als eine Wandung der Kühlkanäle 26 der Verbindungseinrichtung 28.

Wenn die Isolierschalen 40 mit Etagenelementen gemäß Fig. 3A bis 3C bzw. 4A bis 4C verwendet werden, werden die Isolierschalen 40 auf die Oberseite und die Unterseite der mit den Seitenteilen 22, 24 integralen Verbindungseinrichtung 28 geklebt, wodurch die Öffnungen für die Schieber abgedichtet werden.

Bei diesen Kühlmodulen 10 und bei den weiteren bisher beschriebenen Kühlmodulen 10 der Fig. 1A bis 1G, 2A bis 2C, 5A und 5B bilden sie zumindest eine zusätzliche elektrische Isolation zwischen den Batteriezellen 11 und dem Kühlmodul 10.

Ferner können sie bei allen Kühlmodulen 10 eine zusätzliche Schutzfunktion für die Batteriezellen 11 übernehmen.

Die Isolierschalen 40 werden vorzugsweise in einem Tiefziehprozess aus PET-Folie hergestellt und werden sowohl gegen die Zelle als auch gegen die Kühlung, d.h. z.B. die Verbindungseinrichtung 28, bzw. die Kühlflügel oder Kühlbleche verklebt. Sie sollten eine möglichst geringe Wandstärke aufweisen, um ihren Einfluss auf die Kühlperformance zu minimieren. Sie haben einen geschlossenen Boden mit einem umlaufenden Rand, an dessen Vorderseite Aussparungen für die Zelltabs durch z.B. einen Stanzprozess eingebracht werden.

Die Verwendung von Isolierschalen 40, die oben in Zusammenhang mit den Ausführungen gemäß den Fig. 3A bis 3C und 4A bis 4C beschrieben wird, ist nicht auf diese Ausführungsform beschränkt, sondern käme bei jeder Ausführungsform in Frage, bei der ein Aufnahmeraum 32, 32' oberhalb und unterhalb einer Verbindungseinrichtung 28 gebildet wird und bei allen anderen denkbaren Konstruktionen, die Aufnahmeräume für die Batteriezellen aufweisen.

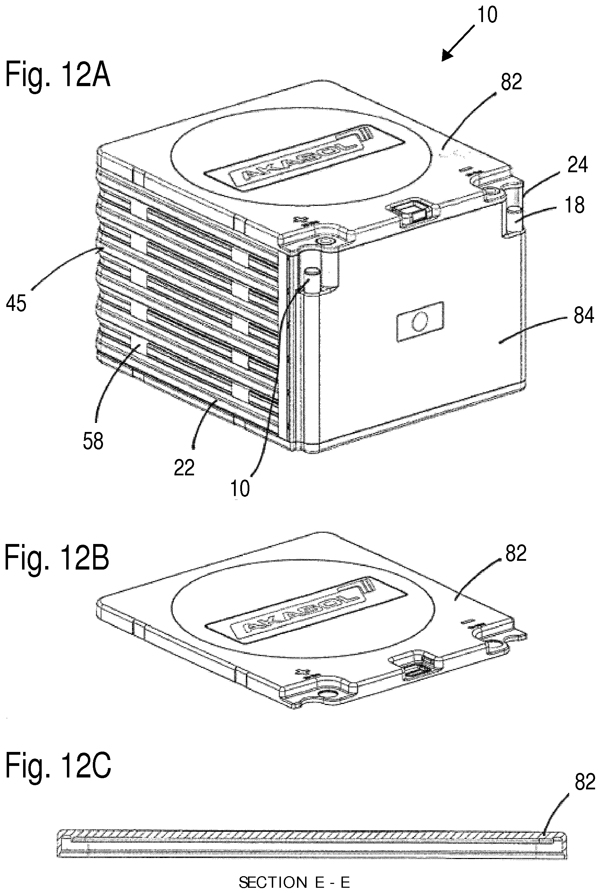

Die Fig. 8 zeigt beispielsweise eine Zeichnung ähnlich der Fig. 12 der WO2012/028298, bei der je eine Batteriezelle auf jeder Kunststoffschale eines Etagenelements aufgeklebt ist. Die aufgestapelten Etagenelemente mit Isolierschalen und Batteriezellen sind dann entsprechend der Fig. 9 zu verstehen. Wie solche Batteriezellen zu einem Batteriemodul zusammengeschaltet werden, ist ausführlich in der Schrift WO 2010/121831 beschrieben, deren diesbezüglicher Inhalt zum Inhalt der vorliegenden Beschreibung gemacht und hier nicht weiter erläutert wird.

Anstatt die Batteriezellen in die einzelnen Etagenelemente (in deren Aufnahmeräume 32 und 32') aufzunehmen und die Etagenelemente dann zu einem Stapel 45 zusammenzusetzen, ist es auch möglich, den Stapel 45 erst auszubilden und die Batteriezellen 22 nach dem Fertigstellen des Stapels 45 in dessen Fächer einzusetzen, die jeweils durch zwei Aufnahmeräume 32 und 32' zweier benachbarter Etagenelemente gebildet werden. Dabei können auch weitere Batteriezellen in den verbleibenden obersten Aufnahmeraum 32 des obersten Etagenelements und in den untersten Aufnahmeraum 32' des untersten Etagenelements eingesetzt werden.

Egal welche Vorgehensweise gewählt wird, werden die Aufnahmeräume 32 und 32' durch die Aufnahme von insbesondere flachen rechteckigen oder quadratischen Batteriezellen gefüllt.

Die vorliegende Erfindung umfasst auch ein Verfahren zur Herstellung eines Kühlmoduls 10 eines aus wiederaufladbaren Zellen bestehenden Batteriemoduls mit den Schritten:
a) Herstellung mehrerer gleichartiger Etagenelemente 20, wobei jedes Etagenelement aus einem ersten und einem zweiten, je mindestens einen Strömungskanal 21, 21' aufweisenden Seitenteil 22, 24 sowie aus einer Kühlkanäle 26 aufweisenden Verbindungseinrichtung 28, deren Kühlkanäle 26 sich zwischen den Strömungskanälen 21, 21' der Seitenteile 22, 24 erstrecken,
b) Bildung eines Stapels 45 aus den Etagenelementen 20,
c) Einführung der Zellen in Räume 32, 32', die von den Verbindungseinrichtungen 28 und den Seitenteilen 22, 24 definiert sind,
d) Anbringung eines Strömungsverteilers 12 auf der Eingangsseite des Stapels an den dortigen Seitenteilen 22 und Anbringung eines Sammlers 14 auf der Ausgangsseite des Stapels 45 an den dortigen Seitenteilen 24,
e) Verschließen der Strömungskanäle 21, 21'der Seitenteile 22, 24 auf den dem Strömungsverteiler 12 bzw. dem Sammler 14 abgewandten Enden der Strömungskanäle 21, 21' der Seitenteile 22, 24 und
f) Anbringung von Halteklammern 58 bzw. Haltefedern, um die Etagenelemente 20 aneinander zu halten.

Bei diesem Verfahren wird/werden entweder
g) jeweils eine Zelle auf jeder Seite jeder Verbindungseinrichtung 28 angebracht und die Etagenelemente 20 anschließend zu einem Stapel zusammengesetzt, oder
h) die Etagenelemente 20 zu einem Stapel 45 zusammengesetzt und die Zellen erst nachträglich in von jeweils zwei benachbart angeordneten Etagenelementen 20 gebildete Räume 32, 32' eingeführt, grundsätzlich besteht auch die Möglichkeit eine oder mehrere Batteriezelle(n) in jeden Raum einzuführen, bevorzugt werden zwei Batteriezellen pro Raum 32, 32' eingeführt.

Vorzugsweise umfasst das Verfahren auch den weiteren Schritt:
j) der Anbringung von Isolierschalen 40 an den beiden Seiten der Verbindungseinrichtungen 28 und an den Flachseiten der Batteriezellen, wobei die Isolierschalen 40 vorzugsweise vor dem Zusammensetzen der Etagenelemente 20 zu einem Stapel 45 auf diese aufgebracht werden und die entsprechenden Batteriezellen erst dann auf die freiliegende Seite der Isolierschalen 40 aufgebracht werden oder die Isolierschalen 40 je eine auf einer Seite einer Zelle aufgebracht werden und anschließend die freie Seite der Isolierschale 40 auf eine Verbindungseinrichtung 28 eines einzelnen Etagenelements 20 oder zwei aneinander gelegten Zellen mit ihrer Isolierschalen 40 nach außen in einen zwischen zwei benachbarten Verbindungseinrichtungen 28 zweier benachtbarter Etagenelemente 20 gebildeten Raum 32, 32' eingeführt werden.

Fig. 10 zeigt ein Etagenelement 20 mit Kühlflügeln 64 gemäß des Kühlmoduls 20 nach Fig. 5B. In dem Raum, der zwischen den Kühlflügeln 64 in der Ebene der Kühlflügel 64 gebildet wird, ist eine Brandschutzelement 66 angeordnet. Es handelt sich um ein nicht brennbares, thermisch isolierendes Material, dass zwischen den Batteriezellen 11 einer doppelten Zellenanordnung bestehend aus dem Etagenelement 20 mit jeweils einer Batteriezelle 11 oberhalb und unterhalb der Kühlflügel 64 (hier ist nur die obere Batteriezelle 11 schematisch mit gestrichelten Linien angedeutet) angeordnet wird.

In diesem Zusammenhang kann auch ein schwer entflammbares Material oder ein Material welches sich unter Wärmeinfluss aufbläht, um die Zellen thermisch besser voneinander zu isolieren, zwischen den Batteriezellen 11 einer doppelten Zellenanordnung angeordnet werden.

Gegebenenfalls können bei einem solchen Etagenelement 20 zwei Isolierschalen (wie 40 - nicht gezeigt) zwischen den Batteriezellen 11 und den Kühlfügeln 64, bzw. den Brandschutzelement 66 angeordnet werden. Das Brandschutzelement 66 sollte beim Brand einer Zelle die Brandausbreitung zwischen benachbarten Batteriezellen 11 verhindern und kann darüber hinaus einer zusätzlichen mechanischen Fixierung der Batteriezellen 11 dienen.

Als Brandschutzelement 66 kann z. B. ein Silikatfaserplatte, eine Platte aus einem Blähschaum der sich bei Temperatureinwirkung aufbläht, eine Mineralfaserplatte, eine Stahlplatte oder eine Aluminiumplatte verwendet werden.

Solche Brandschutzelemente 66 können auch zwischen benachbarten Batteriezellen 11, und/oder zwischen der obersten Batteriezelle und einem Deckel des Kühlmoduls 10 (siehe Fig. 12B), und/oder zwischen der untersten Batteriezelle und einem Boden des Kühlmoduls 10 (nicht gezeigt), und/oder an der Frontseite des Kühlmoduls 10 zwischen den elektrischen Anschlussreihen bestehend aus den elektrischen Anschlüssen der Batteriezellen 11 und den Abstandselementen, sowie außerhalb dieser Anschlussreihen auf der den Batteriezellen 11 zugewandten Seite der das Batteriemanagementsystem tragende Platine.

Ferner zeigt die Fig. 10 ein Stabilisierungselement 68, das zwischen den gegenüberliegenden Seitenteilen 22, 24 eines Etagenelements 20 angeordnet ist. Solch ein Stabilisierungselement 68 verhindert ein Auseinanderspreizen der Seitenteile 22, 24. Auch wird die (mechanische) Druckfestigkeit eines Kühlmoduls durch die Verwendung eines Stabilisierungselements 68 erhöht.

Besonders günstig ist es, wenn, wie in der Fig. 11 gezeigt, eine aus Kunststoff oder Silikon bestehende Schaumstofflage 70 zwischen zwei Zellen, die in einem Aufnahmeraum angeordnet sind, eingesetzt, wobei aus Gründen der Übersicht nur die Hälfte eines Aufnahmeraums gezeigt und die obere bzw. unter Zelle nicht eingezeichnet ist.

Gegebenenfalls kann ein solche Schaumstofflage auf den obersten und untersten Zellen des Batteriemoduls angebracht werden (nicht gezeigt). Die Schaumstofflage, die auch durch eine andere Art von Dämpfungselement ersetzt werden kann, die eine Dämpfung der Konstruktion erreicht, dient zur zusätzlichen mechanischen Fixierung der Zellen 11, auch bei einem möglichen Vakuumverlust der Batteriezellen 11. Hierzu wird z.B. ein Silikonschaum mit einer definierten Kompressionsfestigkeit in einer definierten Anordnung und Größe (Fläche und Dicke des Materials) auf die Zellen 11 aufgebracht, um diese mit einer definierten Kraft vorzuspannen. Hierbei ist zu beachten, dass die Kompressionsfestigkeit des Schaummaterials so gewählt werden muss, dass die Batteriezellen beim Zusammenbau nicht beschädigt werden, jedoch durch den Silikonschaum so aneinander gehalten werden, dass keine Freiräume entstehen können, und um die Batteriezellen vor äußeren Einwirkungen wie z.B. Stößen zu Schützen.

Der spezifische Schaumstoff wird in einer definierten Anordnung und Größe (Fläche sowie Dicke des Material) auf die Zellen aufgebracht, um diese mit einer definierten Kraft vorzuspannen. Dabei befindet sich der Schaumstoff zwischen jedem doppeltem Pack sowie auf der obersten und untersten Zelle.

Als Schaumstoff kann auch ein Material verwendet werden, das auch eine Brandschutzfunktion aufweist, so dass es sich bei dem Brandschutzmaterial 66 und dem Dämpfungselement 70, um das gleiche Material handeln kann.

Bei der Verwendung eines Brandschutzmaterial 66 und/oder eines Dämpfungselement 70, wird der Bauraum eines Batteriemodules im Idealfall nicht vergrößert.

Der Schaumstoff 70 steigert auch die Fähigkeit der Batterie, Druckkräfte aufzunehmen.

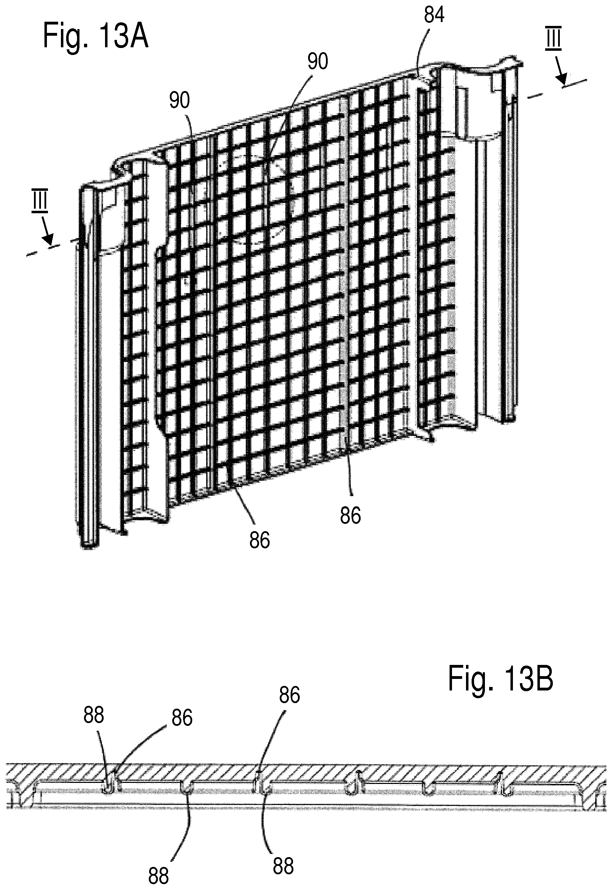

Wie in den Fig. 12A, 12B und 12C gezeigt wird ferner ein Gehäuse 80, ein dreiteiliges Gehäuse mit einer Vorderseite 84 (siehe z.B. Fig 13A), einem nach innen vorgewölbten Deckel 82 (siehe Fig. 12B und 12C) oberhalb des Stapels 45 und einem gegebenenfalls nach innen vorgewölbtem Boden (nicht gezeigt) unterhalb des Stapels 45 verwendet. Hierdurch wird eine Durchbiegung der Gehäuseplatten bei Kraftaufbringung von Innen ausgeglichen, sodass im eingebauten Zustand der Deckel 82 und der Boden, d.h. die Gehäuseplatten, nach Aufnahme der von den Dämpfungselementen ausgehenden Kräfte nicht mehr konkav gewölbt sondern Flach sind.

Ziel ist, dass keine Durchbiegung nach außen entsteht. Bei idealer Auslegung entsteht eine glatte, nicht gewölbte Außenfläche.

Ferner kann, wie in den Fig. 13A und 13B gezeigt, in mindestens einem Teil des Gehäuses, hier in der Vorderseite 84 des Gehäuses 80, mindestens ein definiert geschwächter Bereich 90 im Gehäuse 80, d.h. eine Sollbruchstelle, vorgesehen werden. Dieser Bereich öffnet sich durch Materialbruch bei einem im Batteriemodul 10 herrschenden Überdruck. Dieser geschwächte Bereich ermöglicht ein Ausgasen in einem vorgegebenen Bereich.

Fig. 13A zeigt eine Rückansicht der Vorderseite 84 des Gehäuses 80, mit von einer planaren Außenseite in Richtung der Innenseite des Kühlmoduls 10 erstreckenden, waagrechten und senkrechten Versteifungsrippen 86. Die Versteifungsrippen sind in einer gekreuzten Anordnung vorgesehen.

Fig. 13B zeigt einen Schnitt entlang der Schnittlinie III - III der Fig. 13A. In dieser Schnittzeichnung ist ersichtlich, das manche Versteifungsrippen 86 mit Kerben 88 versehen sind, um die Sollbruchstellen auszubilden.

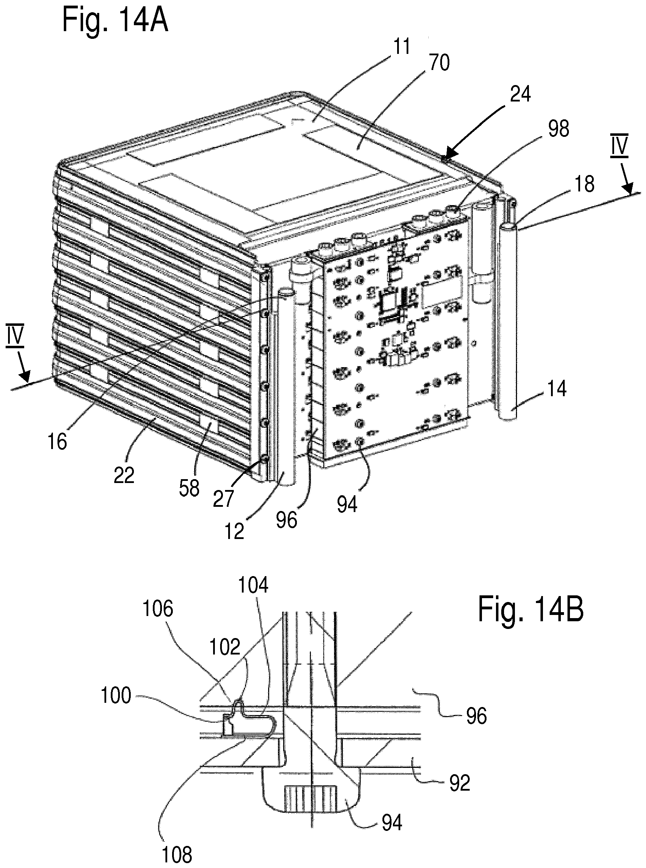

Fig. 14A zeigt eine Darstellung eines Batteriemoduls 1 mit einer installierten Platine 92 eines Batteriemanagementsystem. Um die Platine 92 mit den Batteriezellen 11 elektrisch leitend zu verbinden wird die Platine direkt mit den Anschlüssen der Batteriezellen 11 in kontakt gebracht und mittels Schrauben 94 mit diesen verschraubt.

Fig. 14B zeigt einen Teilschnitt durch eine Schraube 94 entlang der Schnittebene IV - IV gemäß Fig. 14A. Die Schrauben 94 befestigen die Platine 92 an den Abstandselementen 96 der aus Abstandselementen 96 und den Batteriezellenanschlüssen bestehenden Anschlussreihen, die durch senkrecht verlaufende Spannbolzen 98 zu einem Spannverbund zusammengepresst werden. Ein solches Batteriemanagementsystem und dessen Verbindung zu den Batteriezellen 11 wird in der WO 2010/121829 im Detail beschrieben.

Zwischen der Platine 92 und den Abstandselementen sind mehrere Federkontakte 100 vorgesehen. Diese sind haben im Wesentlichen die Form von Haarnadelfedern 100 mit einer Nase 102 an einem Schenkel 104, die Nase 102, die in entsprechende Nuten 106 der Abstandselemente eingreifen und einen sicheren Kontakt zwischen den Abstandselementen und der Platine bewerkstelligen.

Bevorzugt liegen die Federkontakte mit ihrem zweiten Schenkel 108 an leitenden Bereichen der Platine 92 an. Diese zusätzlichen Federkontakte 100 bilden zusätzlich, zu den durch die Schrauben 94 und den leitenden Abstandselementen gebildeten Messpfade, redundante Messpfade des Batteriemanagementsystems.

Ziel der redundanten Messpfade ist der Funktionserhalt der Messpfade auch bei Aussfall einer Schraubverbindung (erster Messpfad) als Hauptmesspfad. Beim herstellen der Platine der Batteriemodule 1 können die Federkontakte 100 in einem Bestückungsautomaten aufgebracht werden

Die Nuten 106 der Abstandselemente 96 stellen sicher, dass das Batteriemanagementsystem planar auf dem Spannverbund sauber aufliegen kann.

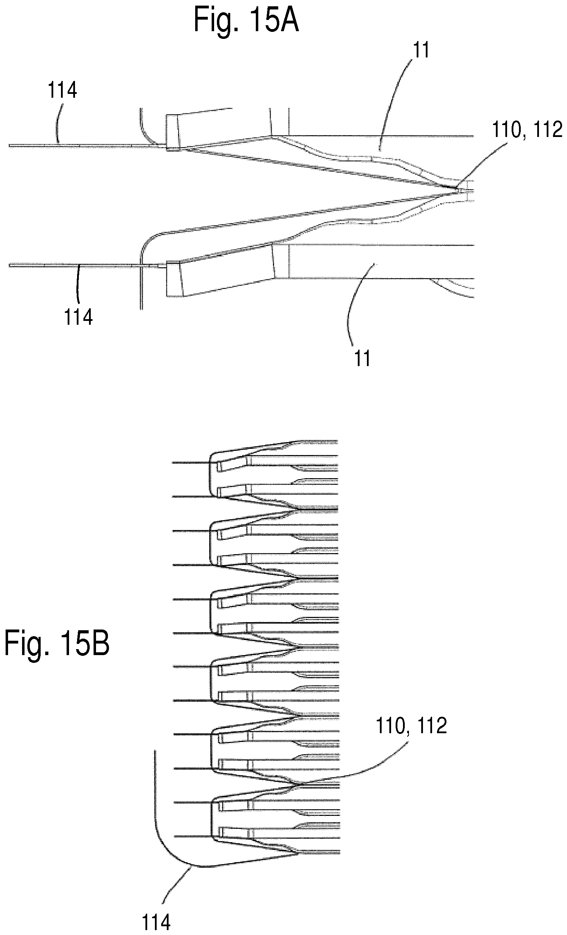

Die Fig. 15A & 15B zeigen schematische Darstellungen der Anbringung eines Temperatur- und/oder Wachstumsfühlers 110, 112 zwischen benachbarten Batteriezellen 11 eines Batteriemoduls 1.

Diese ermöglichen eine Temperaturmessung und/oder Wachstumsmessung (Dickenzunahme) direkt an den Batteriezellen 11. Zum Zweck der Temperaturmessung werden Temperatursensoren 110 an sogenannten Flexleitern 114 zwischen den Batteriezellen 11 eingesetzt. Die Flexleiter(n) 114 wird bzw. werden an geeigneten Stellen der Platine 92 des Batteriemanagementsystems für die Temperatur- und/oder Wachstumsmessung angeschlossen.

Beispielsweise können die Temperatursensoren 110 durch sogenannte NTC-Widerstände (im englischen: negative temperature coefficient thermistors) gebildet werden. Die Temperatursensoren 110 können an jeder Batteriezelle 11 vorgesehen werden. Werden aber mittels eines Isolationsschaums thermische voneinander getrennt.

Zur Wachstumsmessung werden Kontaktflächen mit Abstandshalter aus Kompressionsschaum versehen. Bei Zellwachstum kommt es zur Komprimierung des Schaums und damit zu einer Verbindung der beiden Kontaktflächen, die dem Batteriemanagmentsystem mitgeteilt wird.

Als Wachstumssensoren 112 können als Alternative Drucksensoren verwendet werden. Auch die Wachstumssensoren 112 werden mit entsprechenden Flexleitern 114 an geeigneten Stellen der Platine 92 des Batteriemanagemenstystems angeschlossen. Die Temperatursensoren sowie die Drucksensoren können auch gemeinsam auf einer Flexleiter bestückt werden.

Geometrische Ausdrücke, wie z.B. oben oder unten, werden stets in Bezug auf eine hier gezeigte Ausführungsform und deren Anordnung in der jeweiligen Figur verwendet. Es versteht sich von selbst, dass die Ausführungsformen in ihrer geometrischen Lage verändert werden können.

### Bezugszeichenliste:

- 1: Batteriemodul
- 10: Kühlmodul
- 11: Zellen, Batteriezellen
- 12: Verteiler
- 14: Sammler
- 16: Anschluss, Eingangstülle
- 18: Anschluss, Ausgangstülle
- 20: Etagenelement
- 21, 21': Strömungskanal
- 22: Seitenwand
- 23: offene Bereiche
- 24: Seitenwand
- 25: Dichtungen
- 26: Kühlkanäle
- 27: Schrauben
- 28: Verbindungseinrichtung
- 29, 29': Bohrung, Loch
- 30: Rückseite
- 31: Platte
- 32, 32': Freiraum
- 40: Isolierschalen
- 42: Nut
- 44: Feder, Schenkel, Steg
- 45: Stapel
- 46: Nase
- 48: Nase
- 49: Löcher
- 50: Nische
- 52: Nische
- 54: hakenförmiges Ende
- 56: hakenförmiges Ende
- 58: Halteklammer
- 60: Turbulator
- 62: Kühlblech
- 64: Kühlflügel
- 66: Brandschutzelemente
- 68: Stabilisierungselement
- 70: Schaumstoff
- 80: Gehäuse
- 82: Deckel
- 84: Vorderseite
- 86: Versteifungsrippen
- 88: Kerben
- 90: geschwächter Bereich, Berstbereich
- 92: Platine
- 94: Schrauben
- 96: Abstandelemente
- 98: Spannbolzen
- 100: Federkontakte
- 102: Nase
- 104: Schenkel
- 106: Nut
- 108: Schenkel
- 110: Temperatursensor
- 112: Wachstumssensor
- 114: Flexleiter

## Patentansprüche

1. Batteriemodul bestehend aus Batteriezellen und einem Kühlmodul (10) mit mehreren Etagen (20), wobei das Kühlmodul (10) aus zumindest einem ersten und einem zweiten Seitenteil (22, 24), sowie aus mehreren im Wesentlichen flächigen Elementen (28), die sich planar zwischen den Seitenteilen (22, 24) erstrecken, besteht, wobei zwischen benachbarten flächigen Elementen (28) ein innerer Raum (32, 32') gebildet ist und die Räume zur Aufnahme der Batteriezellen (11) ausgelegt sind, wobei mindestens eine Platine (92) eines Batteriemanagementsystems zum Betrieb eines Batteriemoduls vorgesehen ist, und eine elektrische Verbindung zwischen der Platine (92) und den elektrischen Kontakten der Batteriezellen (11) mittels Federkontakten (100) hergestellt wird, wobei die Federkontakte (100) zwischen leitenden Abstandselementen und der Platine (92) vorgesehen sind, **dadurch gekennzeichnet,**
**dass** die Federkontakte durch Haarnadelfedern (100) gebildet sind und dass Nuten (106) in den leitenden Abstandselementen (96) vorgesehen sind, und dass jede Haarnadelfeder (100) an einem Schenkel (104) einen Vorsprung (102) aufweist, der in einer jeweiligen Nut (106) eines Abstandselements (96) gehalten ist, um den elektrischen Kontakt zwischen der Platine (92) und den leitenden Abstandselementen (96), zumindest unterstützend, bereitzustellen.

2. Batteriemodul (10) nach Anspruch 1, **dadurch gekennzeichnet,**
**dass** die Federkontakte (100) einen redundanten Messpfad des Batteriemanagementsystems bilden.

3. Batteriemodul (10) nach Anspruch 1 oder 2, **dadurch gekennzeichnet, dass** die Etagen aus stapelbaren Etagenelementen (20) bestehen, die aufeinander gestapelt sind, und wobei ein Etagenelement (20) aus einem ersten und einem zweiten, je mindestens einen Strömungskanal (21, 21') aufweisendem Seitenteil (22, 24) sowie aus einem flächigen Element (28), welches sich planar zwischen den Seitenteilen (22, 24) erstreckt, besteht, wobei das Kühlmodul (10) zur Aufnahme der Batteriezellen (11), wie z.B. Lithiumionenbatterien, ausgelegt ist, wobei zwischen benachbarten flächigen Elementen (28) ein innerer Raum (32, 32') gebildet ist und die Räume zur Aufnahme der Batteriezellen (11) ausgelegt sind, wobei Dämpfungsmittel vorgesehen sind und wobei die Dämpfungsmittel aus einem Schaumstoff bestehen und flächig auf einzelnen Batteriezellen angeordnet sind, um diese mit einer definierten Kraft vorzuspannen.

4. Batteriemodul (10) nach nach zumindest einem der vorherigen Ansprüche, **dadurch gekennzeichnet,**
**dass** Brandschutzmittel vorgesehen sind, und/oder dass die Brandschutzmittel unter Temperatureinwirkung aufschäumen und vorzugsweise ein Brandschutzmittel auf Blähgraphitbasis umfassen; und /oder dass die Brandschutzmittel im Bereich der flächigen Elemente angeordnet sind.

5. Batteriemodul nach zumindest einem der vorherigen Ansprüche 3 oder 4, **dadurch gekennzeichnet, dass** die Dämpfungsmittel, vorzugsweise blattförmige und optional aus Schaumstoff bestehende, Dämpfungsmittel, die im Bereich der Räume zur Aufnahme der Batteriezellen, vorzugsweise zwischen benachbarten Batteriezellen und auf der Außenseite der obersten und der untersten Batteriezelle des Moduls angeordnet sind.

6. Batteriemodul nach zumindest einem der vorherigen Ansprüche 3 bis 5, **dadurch gekennzeichnet, dass** die Dämpfungsmittel einen schaumartigen Silikon umfassen.

7. Batteriemodul nach zumindest einem der vorherigen Ansprüche 3 bis 6, **dadurch gekennzeichnet, dass** die Dämpfungsmittel ebenfalls aus einem Brandschutzmaterial hergestellt sind.

8. Batteriemodul nach einem der vorherigen Ansprüche, **dadurch gekennzeichnet, dass** eine Einrichtung vorgesehen ist, die eine Temperatur der Batteriezellen und/oder eine Ausdehnung der Batteriezellen (11) messen kann, vorzugsweise dass die Einrichtung eine Flexleiter umfasst, an die Sensoren angeschlossen sind, die die Temperaturen der Batteriezellen und/oder die Ausdehnung der Batteriezellen (11) messen, und/oder dass die Sensoren zwischen benachbarten Batteriezellen angeordnet sind, insbesondere wobei die Einrichtung zum Messen einer Ausdehnung der Batteriezellen (11) aus sich gegenüberliegenden Kontaktflächen und Abstandshaltern aus Schaumstoff besteht, die die Kontaktflächen im nicht ausgedehnten Zustand der Batteriezellen beabstandet voneinander halten.

9. Batteriemodul nach zumindest einem der vorhergehenden Ansprüche, **dadurch gekennzeichnet, dass** Halterungsfedern (58) vorgesehen sind, die die stapelbaren Etagenelementen (20) aneinander halten.

10. Batteriemodul nach zumindest einem der vorhergehenden Ansprüche, **dadurch gekennzeichnet, dass** das Kühlmodul an mindestens drei Seiten von einem Gehäuse umgeben ist, das, ggf. von den Etagenelement gebildet ist und das mit mindestens einem Berstbereich (90) ausgestattet ist.

11. Batteriemodul nach zumindest einem der vorhergehenden Ansprüche, **dadurch gekennzeichnet, dass** das Kühlmodul an der oberen Seite mit einem nach innen vorgewölbten Deckel (82) und/oder an der unteren Seite mit einem nach innen vorgewölbtem Boden versehen ist.

12. Batteriemodul nach zumindest einem der vorhergehenden Ansprüche, **dadurch gekennzeichnet, dass** ein Turbulator in mindestens einem Strömungskanal auf der Eingangsseite und/oder auf der Ausgangsseite vorgesehen ist und/oder
**dadurch gekennzeichnet, dass** Isolierschalen zwischen Batteriezellen und flächigen Elementen vorgesehen sind, wobei vorzugsweise je eine Batteriezelle auf jeder Isolierschale aufgeklebt ist.

## Claims

1. A battery module composed of battery cells and a cooling module (10) having a plurality of tiers (20), wherein the cooling module (10) is composed of at least one first and one second side part (22, 24) and of a plurality of substantially planar elements (28) which extend in a planar manner between the side parts (22, 24), wherein an inner space (32, 32') is formed between adjacent planar elements (28) and the spaces are configured for the reception of the battery cells (11), wherein at least one electronic circuit board (92) of a battery management system is provided for the operation of a battery module and an electrical connection is produced between the electronic circuit board (92) and electrical contacts of the battery cells (11) by means of spring contacts (100), wherein the spring contacts (100) are provided between conductive spacer elements and the electronic circuit board (92),
**characterized in that**
the spring contacts are formed by hairpin valve springs (100) and grooves (106) are provided in the conductive spacer elements (96); and **in that** each hairpin valve spring (100) has a projection (102) at a limb (104) that is held in a respective groove (106) of a spacer element (96) in order to provide the electrical contact between the electronic circuit board (92) and the conductive spacer elements (96), at least in a supportive manner.

2. A battery module (10) in accordance with claim 1, **characterized in that** the spring contacts (100) form a redundant measurement path of the battery management system.

3. A battery module (10) in accordance with claim 1 or claim 2, **characterized in that** the tiers are composed of stackable tier elements (20) that are stacked on top of one another and wherein a tier element (20) is composed of a first and a second side part (22, 24) each having at least one flow passage (21, 21') as well as of a planar element (28) which extends in a planar manner between the side parts (22, 24), with the cooling module (10) being configured for the reception of the battery cells (11), such as e.g. lithium ion batteries, with an inner space (32, 32') being formed between adjacent planar elements (28) and the spaces being configured for the reception of the battery cells (11), with damping means being provided, and with the damping means being composed of a foam and being arranged in a planar manner on individual battery cells in order to preload these with a predefined force.

4. A battery module (10) in accordance with at least one of the preceding claims,
**characterized in that**
fire-protective means are provided; and/or **in that** the fire-protective means foam up on the influence of temperature and preferably comprise a fire-protective means on the basis of an expandable graphite; and/or **in that** the fire-protective means are arranged in the region of the planar elements.

5. A battery module in accordance with at least one of the preceding claims 3 or 4,
**characterized in that**
the damping means, preferably sheet-like damping means that are optionally composed of foam, are arranged in the region of the spaces for the reception of the battery cells, preferably between adjacent battery cells and at the outer side of the uppermost and the lowermost battery cell of the module.

6. A battery module in accordance with at least one of the preceding claims 3 to 5, **characterized in that** the damping means comprise a foam-like silicone.

7. A battery module in accordance with at least one of the preceding claims 3 to 6, **characterized in that** the damping means are also composed of a fire-protective material.

8. A battery module in accordance with any one of the preceding claims, **characterized in that** an installation is provided that can measure a temperature of the battery cells and/or an expansion of the battery cells (11); preferably **in that** the installation comprises a flex conductor to which sensors are connected that measure the temperatures of the battery cells and/or the expansion of the battery cells (11); and/or **in that** the sensors are arranged between adjacent battery cells, with the installation for measuring an expansion of the battery cells (11) in particular being composed of oppositely disposed contact surfaces and spacer elements of foam that maintain a spacing between the contact surfaces with respect to one another in the non-expanded state of the battery cells.

9. A battery module in accordance with at least one of the preceding claims, **characterized in that** holding springs (58) are provided that hold the stackable tier elements (20) to one another.

10. A battery module in accordance with at least one of the preceding claims, **characterized in that** the cooling module is surrounded by a housing at at least three sides, with the housing optionally being formed by the tier elements and having at least one burst region (90).

11. A battery module in accordance with at least one of the preceding claims, **characterized in that** the cooling module is provided with a cover (82) at the upper side that is inwardly arched and/or is provided with a base at the lower side that is inwardly arched.

12. A battery module in accordance with at least one of the preceding claims, **characterized in that** a turbulator is provided in at least one flow passage at the input side and/or at the output side; and/or
**characterized in that** insulating shells are provided between the battery cells and the planar elements, with a battery cell preferably respectively being adhesively bonded to each insulating shell.

## Revendications

1. Module de batterie composé de cellules de batterie et d'un module de refroidissement (10) avec plusieurs étages (20), le module de refroidissement (10) étant composé d'au moins un premier et un deuxième élément latéral (22, 24) ainsi que de plusieurs éléments essentiellement surfaciques (28) qui s'étendent de manière planaire entre les éléments latéraux (22, 24), dans lequel, entre les éléments surfaciques voisins (28), un espace intérieur (32, 32') est formé et les espaces de réception de batterie (11) sont conçus, dans lequel au moins une platine (92) d'un système de gestion de batterie est prévue pour le fonctionnement d'un module de batterie, et une connexion électrique entre la platine (92) et les contacts électriques des cellules de batterie (11) est établie au moyen de contacts à ressort (100), dans lequel les contacts à ressort (100) sont prévus entre des éléments d'écartement conducteurs et la platine (92), **caractérisé en ce que**
les contacts à ressort sont formés par des ressorts en épingle à cheveux (100) et **en ce que** des rainures (106) sont prévues dans les éléments d'écartement conducteurs (96), et **en ce que** chaque ressort en épingle à cheveux (100) présente, au niveau d'une branche (104), une projection (102) qui est maintenue dans une rainure correspondante (106) d'un élément d'écartement (96) pour assurer, ou tout au moins à assister le contact électrique entre la platine (92) et les éléments d'écartement conducteurs (96).

2. Module de batterie (10) selon la revendication 1, **caractérisé en ce que** les contacts à ressort (100) forment un trajet de mesure redondant du système de gestion de batterie.

3. Module de batterie (10) selon la revendication 1 ou 2, **caractérisé en ce que** les étages sont constitués d'éléments étagés empilables (20) qui sont empilés les uns sur les autres, et dans lequel un élément étagé (20) se compose d'un premier et d'un deuxième élément latéral (22, 24) présentant chacun au moins un canal d'écoulement (21, 21'), ainsi que d'un élément surfacique (28) qui s'étend de manière planaire entre les éléments latéraux (22, 24), dans lequel le module de refroidissement (10) est conçu pour la réception des cellules de batterie (11), comme par exemple les batteries lithium-ion, dans lequel, entre des éléments surfaciques voisins (28), un espace intérieur (32, 32') est formé et les espaces de réception des cellules de batterie (11) sont conçus, dans lequel il est prévu des moyens d'amortissement et dans lequel les moyens d'amortissement se composent d'une mousse et sont agencés sur toute la surface sur les différentes cellules de batterie pour précontraindre celles-ci avec une force définie.

4. Module de batterie (10) selon l'une au moins des revendications précédentes,
**caractérisé en ce que**
il est prévu des agents de protection anti-incendie, et/ou **en ce que** les agents de protection anti-incendie montent en mousse sous l'influence de la température et comprennent de préférence un agent de protection anti-incendie sur une base de graphite expansé ; et/ou **en ce que** les agents de protection anti-incendie sont agencés dans la zone des éléments surfaciques.

5. Module de batterie selon l'une au moins des revendications précédentes 3 ou 4,
**caractérisé en ce que** les moyens d'amortissement sont de préférence des moyens d'amortissement en forme de feuille et en option en mousse, qui sont agencés dans la zone des espaces de réception des cellules de batterie, de préférence entre les cellules de batterie voisines et sur le côté extérieur de la cellule de batterie la plus supérieure et la plus inférieure du module.

6. Module de batterie selon l'une au moins des revendications précédentes 3 à 5,
**caractérisé en ce que** les moyens d'amortissement comprennent une silicone semblable à une mousse.

7. Module de batterie selon l'une au moins des revendications précédentes 3 à 6,
**caractérisé en ce que** les moyens d'amortissement sont également réalisés à partir d'un matériau de protection anti-incendie.

8. Module de batterie selon l'une des revendications précédentes, **caractérisé en ce qu'**il est prévu un dispositif qui peut mesurer une température des cellules de batterie et/ou une extension des cellules de batterie (11), de préférence **en ce que** le dispositif comprend un conducteur flexible auquel sont raccordés les capteurs qui mesurent la température des cellules de batterie et/ou l'extension des cellules de batterie (11), et/ou **en ce que** les capteurs sont agencés entre les cellules de batterie voisines, en particulier dans lequel le dispositif de mesure d'une extension des cellules de batterie (11) est composé de surfaces de contact en vis-à-vis et de supports d'écartement en mousse qui maintiennent les surfaces de contact à distance les unes des autres dans un état non en extension des cellules de batterie.

9. Module de batterie selon l'une au moins des revendications précédentes, **caractérisé en ce qu'**il est prévu des ressorts de maintien (58) qui maintiennent les éléments étagés empilables (20) les uns contre les autres.

10. Module de batterie selon l'une au moins des revendications précédentes, **caractérisé en ce que** le module de refroidissement est entouré sur au moins trois côtés par un boîtier qui est formé le cas échéant par les éléments étagés et qui est doté d'au moins une zone d'éclatement (90).

11. Module de batterie selon l'une au moins des revendications précédentes, **caractérisé en ce que** le module de refroidissement est doté, sur le côté supérieur, d'un couvercle préalablement voûté vers l'intérieur (82) et/ou, sur le côté inférieur, d'un fond préalablement voûté vers l'intérieur.

12. Module de batterie selon l'une au moins des revendications précédentes, **caractérisé en ce qu'**il est prévu un turbulateur dans au moins un canal d'écoulement sur le côté d'entrée et/ou sur le côté de sortie, et/ou **caractérisé en ce qu'**il est prévu des coques isolantes entre les cellules de batterie et les éléments surfaciques, dans lequel une cellule de batterie est de préférence à chaque fois collée sur chaque coque isolante.
